# EUROPEAN PATENT APPLICATION

(11) **EP 1 683 832 A1**
(43) Date of publication of application: **26.07.2006**
(21) Application number: 04799494.2
(22) Date of filing: 04.11.2004
(51) Int. Cl.: C08L 9/00, C08L 101/00

(54) **THERMOPLASTIC ELASTOMER COMPOSITION AND MOLDING THEREOF**

(30) Priority: 06.11.2003 JP 2003377098
(71) Applicant: JSR Corporation, Tokyo 104-8410 (JP)
(72) Inventor: KANAE, Kentarou, Chuo-ku Tokyo 1048410 (JP); NAKANISHI, Hideo, Chuo-ku Tokyo 1048410 (JP); KOBAYASHI, Masato, Chuo-ku Tokyo 1048410 (JP); KOUJINA, Junji, Chuo-ku Tokyo 1048410 (JP)
(74) Representative: TBK-Patent
(86) International application number: PCT/JP2004/016315
(87) International publication number: WO 2005/044910

(57) **Abstract**

TPE and TPV excellent in flexibility, compression set and mechanical strength are obtained by using a conjugated diene-based polymer having a sharp molecular weight distribution which is obtained by polymerization using a neodymium-based catalyst.

A thermoplastic elastomer composition containing (A) a conjugated diene-based polymer obtained by polymerizing a conjugated diene-based compound using a rare earth element compound-based catalyst and (B) a thermoplastic resin, and a formed article using the same.

## Description

### Technical Field

The present invention relates to a thermoplastic elastomer composition excellent in flexibility, compression set and mechanical strength, in which a conjugated diene-based polymer obtained by polymerization using a neodymium-based catalyst is used, and a formed article thereof.

### Background Art

Conjugated diene-based polymers industrially play a very important role, and many proposals have hitherto been made for polymerization catalysts for the conjugated diene-based compounds. They industrially play a very important role. In particular, in order to obtain conjugated diene-based polymers having high performances in thermal and mechanical properties, many polymerization catalysts giving a high content of cis-1,4-bonds have been studied and developed. For example, composite catalyst systems containing a transition metal compound such as nickel, cobalt, titanium or the like as a main component are well known. Some of them have already been industrially widely used as polymerization catalysts for butadiene, isoprene or the like [see non-patent document 1: *Ind. Eng. Chem., 48,* 784 (1956) and patent document 1: JP-B-37-8198] .

By the way, as the thermoplastic elastomer (TPE) [including a dynamically crosslinked thermoplastic elastomer (TPV)], an EPDM/polyolefin-based resin (polyethylene or polypropylene) system is a mainstream. However, it has a disadvantage of being inferior in rubber elasticity (compression set and rebound resilience).
On the other hand, TPV such as polybutadiene rubber in which the conventional conjugated diene-based polymer as described above is used is excellent in rubber elasticity compared to the EPDM system (for example, non-patent document 2: A.Y. Coran, N.R. Legge, et al, *Thermoplastic Elastomer,* 133 (July, 1987)), but has a disadvantage of being inferior in mechanical strength.

Non-Patent Document 1: *Ind. Eng. Chem.,* 48, 784 (1956) Patent Document 1: JP-B-37-8198
Non-Patent Document 2: A.Y. Coran, N.R. Legge, et al, *Thermoplastic Elastomer,* 133 (July, 1987)

### Disclosure of the Invention

### Objects That the Invention Are to Solve

Objects of the present invention are to obtain TPE and TPV excellent in flexibility, compression set and mechanical strength by using a conjugated diene-based polymer having a sharp molecular weight distribution which is obtained by polymerization using a neodymium-based catalyst.

### Means for Solving the Problem

The present invention relates to a thermoplastic elastomer composition characterized in that the composition comprises (A) a conjugated diene-based polymer obtained by polymerizing a conjugated diene-based compound using a rare earth element compound-based catalyst and (B) a thermoplastic resin.
The above-mentioned conjugated diene-based polymer (A) as used herein is preferably one obtained by polymerizing the conjugated diene-based compound using a catalyst containing the following components (a) to (d) as main components.
Component (a) : a compound containing a rare earth element having an atomic number of 57-31 in the Periodic Table or a compound obtained by reaction of the compound with a Lewis base (hereinafter also referred to as "rare earth metal compound (a)") ;
Component (b): an alumoxane;
Component (c): an organoaluminum compound corresponding to AIR¹R²R³ (wherein R¹ and R², which may be the same or different, represent a hydrocarbon group having 1 to 10 carbon atoms or a hydrogen atom, and R³ represents a hydrocarbon group having 1 to 10 carbon atoms, provided that R³ may be the same as or different from the above R¹ or R²); and
Component (d): a silicon halide compound and/or a halogenated organosilicon compound (hereinafter also referred to as "silicon compound (d)").
As the above-mentioned component (a), preferred is neodymium.
Further, as the above-mentioned conjugated diene-based compound, preferred is 1,3-butadiene.
Furthermore, the above-mentioned conjugated diene-based polymer preferably has a 1,4-cis bond content of 90% or more, and a ratio (Mw/Mn) of a weight-average molecular weight (Mw) to a number-average molecular weight (Mn) of 3.5 or less as measured by gel permeation chromatography.
On the other hand, as the above-mentioned thermoplastic resin (B), preferred is at least one selected from the group consisting of a crystalline polyolefin-based resin, an amorphous polyolefin-based resin and a hydrogenated diene polymer.
Further, as the thermoplastic elastomer composition of the present invention, preferred is one obtained by dynamic heat treatment of the above-mentioned conjugated diene-based polymer (A) and thermoplastic resin (B) under the presence of a crosslinking agent.
Furthermore, for the compounding ratio of the thermoplastic elastomer composition of the present invention, it is preferred that the conjugated diene-based polymer (A) is from 50 to 95 parts by weight and the thermoplastic resin (B) is from 50 to 5 parts by weight [provided that (A) + (B) =100 parts by weight].
In addition, the thermoplastic elastomer composition of the present invention may contain a softener and/or a plasticizer in an amount of 200 parts by weight or less, when the total of the conjugated diene-based polymer (A) and the thermoplastic resin (B) is taken as 100 parts by weight.
Then, the present invention relates to a formed article formed of the above-mentioned thermoplastic elastomer composition.

### Advantages of the Invention

According to the present invention, there are obtained a thermoplastic elastomer composition excellent in flexibility, compression set and mechanical strength by using a conjugated diene-based polymer obtained by polymerization using a neodymium-based catalyst, and a formed article thereof.

### Best Mode for Carrying Out the Invention

### (A) Conjugated Diene-Based Polymer

The conjugated diene-based polymer (A) used in the present invention may be any, as long as it is a polymer obtained by polymerization using a rare earth element compound-based catalyst. However, a catalyst system containing the above-mentioned components (a) to (d) as main components is preferably used.

(a) Rare Earth Compound:
The component (a) used in the catalyst of the present invention is a compound containing a rare earth element having an atomic number of 57-71 in the Periodic Table or a compound obtained by reaction of the compound with a Lewis base. The element is preferably neodymium, praseodymium, cerium, lanthanum, gadolinium or a mixture thereof, and more preferably neodymium. The rare earth element-containing compound of the present invention is a carboxylate, an alkoxide, a β-diketone complex, a phosphate or a phosphite. Of these, preferred is a carboxylate or a phosphate, and particularly preferred is a carboxylate.

The carboxylate of the rare earth element is represented by general formula (R²³-CO₂) ₃M (wherein M is a rare earth element having an atomic number of 57-71 in the Periodic Table), R²³ indicates a hydrocarbon group having 1 to 20 carbon atoms, which is preferably a saturated or unsaturated alkyl group and straight-chain, branched or cyclic, and the carboxyl group is bonded to a primary, secondary or tertiary carbon atom.
Specific examples thereof include salts of octanoic acid, 2-ethyl-hexanoic acid, oleic acid, stearic acid, benzoic acid, napthenic acid, Versatic Acid (trade name, manufactured by Shell Chemical Corporation, a carboxylic acid in which a carboxyl group is bonded to a tertiary carbon atom) and the like, and preferred are salts of 2-ethyl-hexanoic acid, napthenic acid and Versatic Acid.

The alkoxide of the rare earth element is represented by general formula (R²⁴O₃)M (wherein M is a rare earth element having an atomic number of 57-71 in the Periodic Table), R²⁴ indicates a hydrocarbon group having 1 to 20 carbon atoms, which is preferably a saturated or unsaturated alkyl group and straight-chain, branched or cyclic, and the carboxyl group is bonded to a primary, secondary or tertiary carbon atom. Examples of the alkoxy groups represented by R²⁴O include a 2-ethyl-hexylalkoxy group, an oleylalkoxy group, a stearylalkoxy group, a phenoxy group, a benzylalkoxy group and the like. Of these, preferred are a 2-ethyl-hexylalkoxy group and a benzylalkoxy group.

The β-diketone complexes of the rare earth elements include an acetylacetone, benzoylacetone, propionileacetone, valerylacetone and ethylacetylacetone complexes and the like of the rare earth elements. Of these, preferred are an acetylacetone complex and an ethylacetylacetone complex.

The phosphates or phosphites of the rare earth elements include bis(2-ethylhexyl) phosphate, bis(1-methylheptyl) phosphate, bis(p-nonylphenyl) phosphate, bis(polyethylene glycol-p-nonylphenyl) phosphate, (1-methylheptyl)(2-ethylhexyl) phosphate, (2-ethylhexyl)(p-nonylphenyl) phosphate, mono-2-ethylhexyl 2-ethylhexylphosphonate, mono-p-nonylphenyl 2-ethylhexylphosphonate, salts of bis(2-ethylhexyl)phosphinic acid, bis(1-methylheptyl)phosphinic acid, bis(p-nonylphenyl)phosphinic acid, (1-methylheptyl)(2-ethylhexyl)phosphinic acid, (2-ethylhexyl)(p-nonylphenyl) phosphinic acid and the like of the rare earth elements. Preferred examples thereof include bis(2-ethylhexyl) phosphate, bis(1-methylheptyl) phosphate, mono-2-ethylhexyl 2-ethylhexylphosphonate and a salt of bis(2-ethylhexyl)-phosphinic acid. Of the ones illustrated above, particularly preferred is a phosphate of neodymium or a carboxylate of neodymium, and particularly, most preferred is a carboxylate of neodymium such as a 2-ethyl-hexanoate of neodymium or a versatate of neodymium.

The Lewis base used for easily solubilizing the rare earth element-containing compound in a solvent is used as a mixture of both or as a product obtained by previously reacting both, at a molar ratio of 0 to 30 moles, preferably 1 to10 moles, per mole of metal compound of the rare earth element.

The Lewis bases as used herein include acetylacetone, tetrahydrofuran, pyridine, N,N-dimethylformamide, thiophene, diphenyl ether, triethylamine, an organophosphorus compound, and a monohydric or dihydric alcohol.
The above-mentioned components (a) can be used either alone or as a mixture of two or more of them.
(b) Alumoxane:
The alumoxane (b) used in the catalyst of the present invention is a compound having a structure represented by formula (I) or formula (II). Further, it may be aggregates of the alumoxanes as shown in *Fine Chemical, 23* (9), 5 (1994), J. *Am. Chem. Soc.,115,* 4971 (1993) and J. *Am. Chem. Soc., 117,* 6465 (1995).

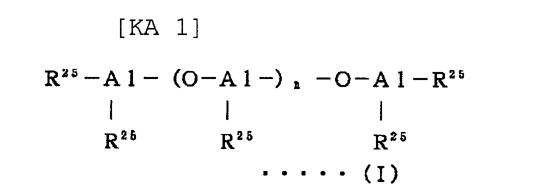

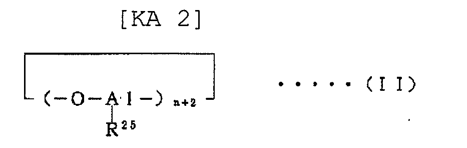

(wherein R²⁵ is a hydrocarbon group having 1 to 20 carbon atoms, and n is an integer of 2 or more).
In the alumoxane represented by formula (I) or formula (II), the hydrocarbon groups represented by R²⁵ include a methyl, ethyl, propyl, butyl, isobutyl, t-butyl, hexyl, isohexyl, octyl and isooctyl groups and the like. Preferred are a methyl, ethyl, isobutyl and t-butyl groups, and particularly preferred is a methyl group. Further, n is an integer of 2 or more, and preferably 4 to 100. Specific examples of the alumoxanes (b) include methylalumoxane, ethylalumoxane, n-propylalumoxane, n-butylalumoxane, isobutylalumoxane, t-butylalumoxane, hexylalumoxane, isohexylalumoxane and the like.

The production of the alumoxane (b) may be carried out by any well-known techniques. For example, the alumoxane can be produced by adding a trialkylaluminum or a dialkylaluminum monochloride to an organic solvent such as benzene, toluene or xylene, and further adding water, steam, steam-containing nitrogen gas or a salt having crystal water such as copper sulfate pentahydrate or aluminum sulfate hexadecahydrate to allow the reaction to be conducted.
The above-mentioned alumoxanes (b) can be used either alone or as a mixture of two or more of them.

(c) Organoaluminum Compound:
The organoaluminum compounds (c) used in the catalyst of the present invention, which correspond to AlR¹R²R³ (wherein R¹ and R², which may be the same or different, represent a hydrocarbon group having 1 to 10 carbon atoms or a hydrogen atom, and R³ represents a hydrocarbon group having 1 to 10 carbon atoms, provided that R³ may be the same as or different from the above R¹ or R²), include, for example, trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum, diethylaluminum hydride, di-n-propylaluminum hydride, di-n-butylaluminum hydride, diisobutylaluminum hydride, dihexylaluminum hydride, diisohexylaluminum hydride, dioctylaluminum hydride, di-isooctylaluminum hydride, ethylaluminum dihydride, n-propylaluminum dihydride, isobutylaluminum dihydride and the like, and preferred are triethylaluminum, triisobutylaluminum, diethylaluminum hydride and diisobutylaluminum hydride.
The organoaluminum compounds of the present invention can be used either alone or as a mixture of two or more of them.

(d) Silicon Compound:
The component (d) used in the catalyst of the present invention is a silicon halide compound and/or an organosilicon halide compound.
Of the components (d), the silicon halide compounds include, for example, silicon tetrachloride, silicon tetrabromide, silicon tetraiodide, hexachlorodisilane and the like.
Further, of the components (d), the organosilicon halide compounds include, for example, triphenylchlorosilane, trihexylchlorosilane, trioctylchlorosilane, tributylchlorosilane, triethylchlorosilane, trimethylchlorosilane, methylchlorosilane, trimethylbromosilane, diphenyldichlorosilane, dihexyldichlorosilane, dioctyldichlorosilane, dibutyldichlorosilane, diethyldichlorosilane, dimethyldichlorosilane, methyldichlorosilane, phenyltrichlorosilane, hexyltrichlorosilane, octyltrichlorosilane, butyltrichlorosilane, methyltrichlorosilane, ethyltrichlorosilane, vinyltrichlorosilane, trichlorosilane, tribromosilane, vinylmethyldichlorosilane, vinyldimethylchlorosilane, chloro-methylsilane, chloromethyltrimethylsilane, chloromethyldimethylchlorosilane, chloromethylmethyldichlorosilane, chloromethyltrichlorosilane, dichloromethylsilane, di-chloromethylmethyldichlorosilane, dichloromethyldimethyl-chlorosilane, dichlorotetramethyldisilane, tetrachloro-dimethylsilane, bischlorodimethylsilylethane, dichlorotetramethyldisiloxane, trimethylsiloxydichlorosilane, tri-methylsiloxydimethylchlorosilane, tristrimethylsiloxydi-chlorosilane and the like. As the component (d), preferred is silicon tetrachloride, trieythylchlorosilane, trimethylchlorosilane, diethyldichlorosilane, dimethyldichlorosilane, methyldichlorosilane, ethyltrichlorosilane, methyltrichlorosilane, trichlorosilane, dichlorotetramethyldisilane or dichlorotetramethyldisiloxane, and more preferred is silicon tetrachloride.
The above-mentioned components (d) can be used either alone or as a mixture of two or more of them.

The amount of each component or composition ratio in the catalyst used in the present invention is set to various different ones in accordance with its purpose or necessity. Of these, the component (a) is preferably used in an amount of 0.0001 to 1.0 mmol per 100 g of the conjugated diene compound. Less than 0.0001 mmol unfavorably results in a decrease in polymerization activity, whereas exceeding 1.0 mmol results in an increase in catalyst concentration becomes, which unfavorably necessitates an ash removing process. In particular, it is preferably used in an amount of 0.0005 to 0.5 mmol.
Further, the amount of the component (b) used can be generally represented by the molar ratio of Al to the component (a), and the molar ratio of the component (a) to the component (b) is from 1:1 to 1:500, preferably from 1:3 to 1:250, and more preferably from 1:5 to 1:100.
Furthermore, for the amount of the component (c) used, the molar ratio of the component (a) to the component (c) is from 1:1 to 1:300, and preferably from 1:3 to 1:150.
In addition, for the amount of the component (d) used, the molar ratio of component (a) to component (d) is from 1:0.1 to 1:30, and preferably from 1:0.2-1:15.
Outside the ranges of these catalyst amounts or catalyst constituent ratios, the catalyst does not act as a high activity catalyst, or a process for removing a catalyst residue becomes necessary. This is therefore unfavorable.
In order to control the molecular weight of the polymer, the polymerization reaction may be conducted allowing hydrogen gas to coexist, in addition to the above-mentioned components (a) to (d).

In addition to the above-mentioned component (a), component (b), component (c) and component (d), a conjugated diene-based compound and/or a non-conjugated diene-based compound may be used in an amount of 0 to 50 moles per mole of the component (a) compound as a catalyst component, as needed.
As the conjugated diene-based compound used for the production of the catalyst, there can also be used 1, 3-butadiene, isoprene or the like, which is the same compound as the polymerization monomer. Further, the non-conjugated diene-based compound include, for example, divinylbenzene, diisopropenylbenzene, triisopropenylbenzene, 1,4-vinyl-hexadiene, ethylidene norbornene and the like.
The conjugated diene-based compound and/or non-conjugated diene-based compound as a catalyst component is not essential, but has the merit of further improving catalytic activity when it is used together.

The production of the catalyst is performed, for example, by reacting the components (a) to (d) dissolved in a solvent, and further the conjugated diene-based compound and/or non-conjugated diene-based compound, as needed.
In this case, the order of addition of these components may be arbitrary.
It is preferred that these respective components are previously mixed and reacted, and then aged, from the viewpoints of improvement of polymerization activity and shortening of polymerization initiation induction period.
The aging temperature as used herein is from 0 to 100°C, and preferably from 20 to 80°C. Lower than 0°C results in insufficient aging, whereas exceeding 100°C unfavorably results in lowering of catalytic activity and broadening of molecular weight distribution.
There is no particular limitation on the aging time, and the components can also be brought into contact with one another in a line before the addition thereof to a polymerization reaction vessel. Usually, aging for 0.5 minute or more is sufficient, and stability is kept for several days.

In the present invention, there is used the conjugated diene-based polymer (A) obtained by polymerizing the conjugated diene-based compound using the catalyst containing the above-mentioned components (a) to (d) as main components.
The conjugated diene-based compounds which can be polymerized by the catalyst of the present invention include 1,3-butadiene, 2-methyl-1,3-butadiene (isoprene), 2,3-dimethyl-1,3-butadiene, 1,3-pentadiene, 1,3-hexadiene, myrcene and the like. Preferred are 1,3-butadiene, isoprene and 1,3-pentadiene, and particularly preferred is 1,3-butadiene.
These conjugated diene-based compounds can be used either alone or as a mixture of two or more of them. When the mixture of two or more of them is used, a copolymer is obtained.

The polymerization of the conjugated diene-based polymer (A) of the present invention can be performed using a solvent or in the absence of solvent.
The solvent for the polymerization is an inert organic solvent, and examples thereof include a saturated aliphatic hydrocarbon having 4 to 10 carbon atoms such as butane, pentane, hexane or heptane; a saturated alicyclic hydrocarbon having 6 to 20 carbon atoms such as cyclopentane or cyclohexane; a monoolefin such as 1-butene or 2-butene; an aromatic hydrocarbon such as benzene, toluene or xylene; and a halogenated hydrocarbon such as methylene chloride, chloroform, carbon tetrachloride, trichloroethylene, perchloroethylene, 1,2-dichloroethane, chlorobenzene, bromobenzene or chlorotoluene.

The polymerization temperature is usually from -30°C to +200°C, and preferably from 0°C to +150°C. The polymerization reaction may be of either a batch type or a continuous type. When the solvent for the polymerization is used, the monomer concentration in this solvent is usually from 5 to 50% by weight, and preferably from 7 to 35% by weight. Further, for the production of the polymer, in order to prevent the rare earth element compound-based catalyst and polymer of the present invention from being deactivated, such a consideration as to avoid the incorporation of a compound having a deactivation action such as oxygen, water or carbon dioxide gas into the polymerization system as far as possible is required.

According to the present invention, the specified catalyst is used, so that the conjugated diene-based polymer having a high content of 1,4-cis bonds and a sharp molecular weight distribution can be obtained.
The conjugated diene-based polymer before modification thus obtained by using the catalyst containing the components (a) to (d) as main components has a 1,4-cis bond content of preferably 90% or more and more preferably 92% or more, and a 1,2-vinyl bond content of preferably 2.5% or less and more preferably 2.0% or less. Outside these ranges, mechanical properties and wear resistance become inferior.
The adjustment of a microstructure such as the 1,4-cis bond content of these conjugated diene-based polymers can be easily performed by controlling the catalyst composition ratio and polymerization temperature.

Further, Mw/Mn, the ratio of the weight-average molecular weight (Mw) to the number average molecular weight (Mn) of the resulting conjugated diene-based polymer, is preferably 3.5 or less, and more preferably 3.3 or less. Exceeding 3.5 results in poor wear resistance.
The adjustment of this Mw/Mn can be easily performed by controlling the molar ratio of the above-mentioned components (a) to (d).
Furthermore, the Mooney viscosity (ML₁₊₄, 100°C) of the above-mentioned conjugated diene-based polymer is preferably within the range of 10 to 100, and more preferably within the range of 15 to 90. Less than 10 results in poor mechanical properties and wear resistance after vulcanization, whereas exceeding 100 results in poor processability in kneading and deteriorated mechanical properties.
In addition, the molecular weight of the conjugated diene-based polymer obtained in the present invention can be changed over the wide range. However, the weight average molecular weight thereof in terms of polystyrene is usually from 50,000 to 1, 500, 000, and preferably from 100,000 to 1, 000, 000 . Less than 50, 000 results in a liquid polymer, whereas exceeding 1,500,000 unfavorably causes the problems of poor processability, the application of excessive torque in kneading by a roll or a Banbury, the increased temperature of compounded rubber to induce deterioration, and the poor dispersion of carbon black to deteriorate the performance of vulcanized rubber.

The desired conjugated diene-based polymer can be recovered by adding a polymerization terminator and a polymerization stabilizer to the reaction system as needed, and conducting a desolvation and drying operations known in the production of the conjugated diene-based polymer.

In the present invention, the conjugated diene-based compound is thus polymerized using the rare earth element compound-based catalyst, and subsequently, at least one compound selected from the group consisting of the following components (e) to (j) is reacted with an active terminal of the resulting polymer (hereinafter also referred to as "modification"), thereby being able to form a polymer in which the polymer molecular weight is increased or a polymer chain is branched. This modification improves the wear resistance, mechanical properties and cold flow.

Component (e) : A halogenated organometallic compound, a halogenated metal compound or an organometallic compound corresponding to R⁴M^{,}X₄₋ₙ, M' X₄, M'X₃, R⁴ₙM'(-R⁵-COOR⁶)₄₋ₙ or R⁴ₙM' (-R⁵-COR⁶)₄₋ₙ (wherein R⁴ and R⁵, which may be the same or different, are hydrocarbon groups having 1 to 20 carbon atoms, R⁶ is a hydrocarbon group having 1 to 20 carbon atoms, which may have a carbonyl group or an ester group on a side chain, M' is a tin atom, a silicon atom, a germanium atom or a phosphorus atom, X is a halogen atom, and n is an integer of 0 to 3).
Component (f): A heterocumulene compound containing a Y=C=Z bond (wherein Y is a carbon atom, an oxygen atom, a nitrogen atom or a sulfur atom, and Z is an oxygen atom, a nitrogen atom or a sulfur atom) in its molecule
Component (g): A hetero three-membered ring compound containing a

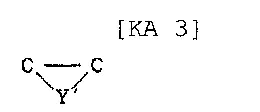

bond (wherein Y' is an oxygen atom, a nitrogen atom or a sulfur atom) in its molecule
Component (h): A halogenated isocyano compound
Component (i) : A carboxylic acid, an acid halide, an ester compound, a carbonic acid ester compound or an acid anhydride corresponding to R⁷- (COOH) ₘ, R⁸ ( COX)ₘ, R⁹- (COO-R¹⁰) , R¹¹-OCOO-R¹², R¹³- (COOCO-R¹⁴)ₘ or

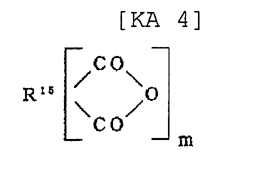

(wherein R⁷ to R¹⁵, which may be the same or different, are hydrocarbon groups having 1 to 50 carbon atoms, X is a halogen atom, and m is an integer of 1 to 5)
Component (j): A metal salt of a carboxylic acid corresponding to R¹⁶₁M" (OCOR¹⁷)₄₋₁, R¹⁸₁M" (OCO-R¹⁹-COOR²⁰)₄₋₁ or

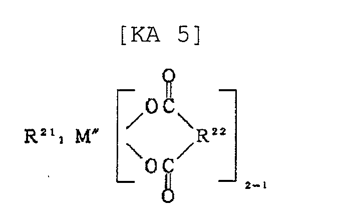

(wherein R¹⁶ to R²², which may be the same or different, are hydrocarbon groups having 1 to 20 carbon atoms, M" is a tin atom, a silicon atom or a germanium atom, and 1 is an integer of 0 to 3)

In the present invention, the halogenated organometallic compound or halogenated metal compound (e) to be reacted with the active terminal of the polymer is represented by the following formula (III):

[KA 6] R⁴ₙM' X₄₋ₙ, M'X₄ or M' X₃ (III)

(wherein R⁴ is a hydrocarbon group having 1 to 20 carbon atoms, M' is a tin atom, a silicon atom, a germanium atom or a phosphorus atom, X is a halogen atom, and n is an integer of 0 to 3).
When M' in the above-mentioned formula (III) is a tin atom, the components (e) include, for example, triphenyltin chloride, tributyltin chloride, triisopropyltin chloride, trihexyltin chloride, trioctyltin chloride, diphenyltin dichloride, dibutyltin dichloride, dihexyltin dichloride, dioctyltin dichloride, phenyltin trichloride, butyltin trichloride, octyltin trichloride, tin tetrachloride and the like.

Further, when M' in the above-mentioned formula (III) is a silicon atom, the components (e) include, for example, triphenylchlorosilane, trihexylchlorosilane, trioctylchlorosilane, tributylchlorosilane, trimethylchlorosilane, diphenyldichlorosilane, dihexyldichlorosilane, dioctyldichlorosilane, dibutyldichlorosilane, dimethyldichlorosilane, methyldichlorosilane, phenylchlorosilane, hexyl-tridichlorosilane, octyltrichlorosilane, butyltrichlorosilane, methyltrichlorosilane, silicon tetrachloride and the like.

Furthermore, when M' in the above-mentioned formula (III) is a germanium atom, the components (e) include, for example, triphenylgermanium chloride, dibutylgermanium dichloride, diphenylgermanium dichloride, butylgermanium trichloride, germanium tetrachloride and the like.
Moreover, when M' in the above-mentioned formula (III) is a phosphorus atom, the components (e) include, for example, phosphorus trichloride and the like.

Further, as the component (e), there can also be used an organometallic compound containing an ester group represented by the following formula (IV) or a carbonyl group represented by the following formula (V) in its molecule.

R⁴ₙM' (-R⁵-COOR⁶)₄₋ₙ (IV)

R⁴ₙM' (-R⁵-COR⁶)₄₋ₙ (V)

(wherein R⁴ and R⁵, which may be the same or different, are hydrocarbon groups having 1 to 20 carbon atoms, R⁶ is a hydrocarbon group having 1 to 20 carbon atoms, which may have a carbonyl group or an ester group on a side chain, M' is a tin atom, a silicon atom, a germanium atom or a phosphorus atom, X is a halogen atom, and n is an integer of 0 to 3).
These components (e) may be used together at any ratio.

The heterocumulene compound (f) to be reacted with the active terminal of the polymer is a compound having a structure represented by the following formula (VI):

Y=C=Z bond (VI)

(wherein Y is a carbon atom, an oxygen atom, a nitrogen atom or a sulfur atom, and Z is an oxygen atom, a nitrogen atom or a sulfur atom).
Here, when Y is a carbon atom and Z is an oxygen atom, the component (f) is a ketene compound, and when Y is a carbon atom and Z is a sulfur atom, it is a thioketene compound. When Y is a nitrogen atom and Z is an oxygen atom, it is an isocyanate compound, and when Y is a nitrogen atom and Z is a sulfur atom, it is a thioisocyanate compound. When both Y and Z are nitrogen atoms, it is a carbodiimide compound, and when both Y and Z are oxygen atoms, it is carbon dioxide. When Y is an oxygen atom and Z is a sulfur atom, it is a carbonyl sulfide, and when both Y and Z are sulfur atoms, it is carbonyl sulfide. However, the component (f) is not limited to these combinations.

Of these, the ketene compounds include, for example, ethylketene, butylketene, phenylketene, toluylketene and the like. The thioketene compounds include, for example, ethylenethioketene, butylthioketene, phenylthioketene, toluylthioketene and the like. The isocyanate compounds include, for example, phenyl isocyanate, 2,4-tolylene diisocyanate, 2,6-tolylene diisocyanate, diphenylmethane diisocyanate, polymeric type diphenylmethane diisocyanate, hexamethylene diisocyanate and the like. The thioisocyanate compounds include, for example, phenyl thioisocyanate, 2,4-tolylene dithioisocyanate, hexamethylene dithioisocyanate and the like. The carbodiimide compounds include, for example, N,N'-diphenylcarbodiimide, N,N'-diethylcarbodiimide and the like.

The hetero three-membered ring compound (g) to be reacted with the active terminal of the polymer is a compound having a structure represented by the following formula (VII):

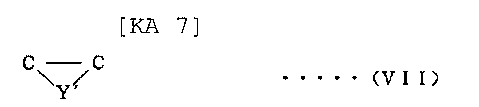

(wherein Y' is an oxygen atom, a nitrogen atom or a sulfur atom).
Here, for example, when Y' is an oxygen atom, the component (g) is an epoxy compound, and when Y' is a nitrogen atom, it is an ethyleneimine derivative. When Y' is a sulfur atom, it is a thiirane compound. The epoxy compounds include, for example, ethylene oxide, propylene oxide, cyclohexene oxide, styrene oxide, epoxidated soybean oil, epoxidated natural rubber and the like. Further, the ethyleneimine derivatives include, for example, ethyleneimine, propyleneimine, N-phenylethyleneimine, N- (β-cyanoethyl) ethyleneimine and the like. Furthermore, the thiirane compounds include, for example, thiirane, methylthiirane, phenylthiirane and the like.

The halogenated isocyano compound (h) to be reacted with the active terminal of the polymer is a compound having a structure represented by the following formula (VIII):

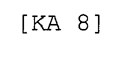

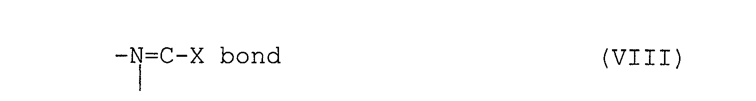

(wherein X is a halogen atom).
The halogenated isocyano compounds include, for example, 2-amino-6-chloropyridine, 2,5-dibromopyridine, 4-chloro2-phenylquinazoline, 2,4,5-tribromoimidazole, 3,6-dichloro-4-methylpyridazine, 3,4,5-trichloropyridazine, 4-amino-6-chloro-2-mercaptopyrimidine, 2-amino-4-chloro-6-methylpyrimidine, 2-amino-4,6-dichloropyrimidine, 6-chloro-2,4-dimethoxypyrimidine, 2-chloropyrimidine, 2,4-dichloro-6-methylpyrimidine, 4,6-dichloro-2-(methylthio)pyrimidine, 2,4,5,6-tetrachloropyrimidine, 2,4,6-trichloropyrimidine, 2-amino-6-chloropyrazine, 2,6-dichloropyrazine, 2,4-bis-(methylthio)-6-chloro-1,3,5-triazine, 2,4,6-trichloro-1,3,5-triazine, 2-bromo-5-nitrothiazole, 2-chlorobenzo-thiazole, 2-chlorobenzooxazole and the like.

The carboxylic acid, acid halide, ester compound, carbonic acid ester compound and acid anhydride (i) to be reacted with the active terminal of the polymer are compounds having structures represented by the following formulas (VIV) to (XIV), respectively:

R⁷-(COOH)ₘ (VIV)

R⁸(COX)ₘ (X)

R⁹-(COO-R¹⁰) (XI)

R¹¹-OCOO-R¹² (XII)

R¹³-(COOCO-R¹⁴)ₘ (XIII)

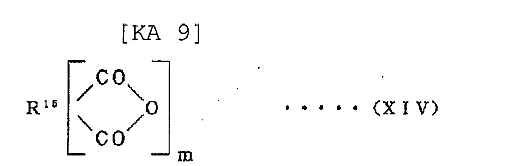

(wherein R⁷ to R¹⁵, which are the same or different, are hydrocarbon groups having 1 to 50 carbon atoms, X is a halogen atom, and m is an integer of 1 to 5).
Here, of the components (i), the carboxylic acids represented by formula (VIV) include, for example, acetic acid, stearic acid, adipic acid, maleic acid, benzoic acid, acrylic acid, methacrylic acid, phthalic acid, isophthalic acid, terephthalic acid, trimellitic acid, pyromellitic acid, mellitic acid, a full or partial hydrate of a polymethacrylic acid ester compound or a polyacrylic acid ester compound and the like.

The acid halides represented by formula (X) include, for example, acetyl chloride, propionyl chloride, butanoyl chloride, isobutanoyl chloride, octanoyl chloride, acryloyl chloride, benzoyl chloride, stearyl chloride, phthaloyl chloride, maleyl chloride, oxalyl chloride, acetyl iodide, benzoyl iodide, acetyl fluoride, benzoyl fluoride and the like.

The ester compounds represented by formula (XI) include, for example, ethyl acetate, ethyl stearate, diethyl adipate, diethyl maleate, methyl benzoate, ethyl acrylate, ethyl methacrylate, diethyl phthalate, dimethyl terephthalate, tributyl trimellitate, tetraoctyl pyromellitate, hexaethyl mellitate, phenyl acetate, polymethyl methacrylate, polyethyl acrylate, polyisobutyl acrylate and the like. Further, the carbonic acid ester compounds represented by formula (XII) include, for example, dimethyl carbonate, diethyl carbonate, dipropyl carbonate, dihexyl carbonate, diphenyl carbonate and the like. The acid anhydrides include, for example, an intermolecular acid anhydride represented by formula (XIII) such as acetic anhydride, propionic anhydride, isobutyric anhydride, isovaleric anhydride, heptanoic anhydride, cinnamic anhydride or benzoic anhydride, and an intramolecular acid anhydride represented by formula (XIV) such as succinic anhydride, methylsuccinic anhydride, maleic anhydride, glutaric anhydride, citraconic anhydride, phthalic anhydride or a styrene-maleic anhydride copolymer.

In addition, the compound mentioned as the component (i) may contain a non-protonic polar group such as an ether group or a tertiary amino group in its molecule within the range not impairing the object of the present invention.
Further, the components (i) can be used either alone or as a mixture of two or more of them.
Furthermore, the component (i) may contain as an impurity a compound having a free alcohol group or phenyl group.
Moreover, the components (i) may be either alone or a mixture of two or more of these compounds.
Additionally, it may be one containing as an impurity a compound having a free alcohol group or phenyl group.

The carboxylic acid metal salt (j) to be reacted with the active terminal of the polymer has a structure represented by the following formulas (XV) to (XVII):

[KA 10]

R¹⁶₁M" (OCOR¹⁷)₄₋₁ (XV)

R¹⁸₁M" (OCO-R¹⁹-COOR²⁰)₄₋₁ (XVI)

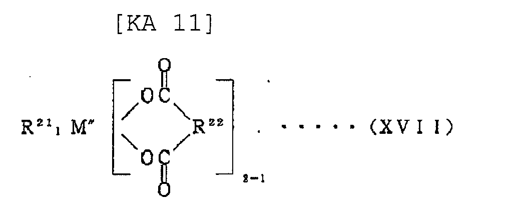

(wherein R¹⁶ to R²², which may be the same or different, are hydrocarbon groups having 1 to 20 carbon atoms, M" is a tin atom, a silicon atom or a germanium atom, and 1 is an integer of 0 to 3).

Here, of the components (j), the compounds represented by the above-mentioned formula (XV) include, for example, triphenyltin laurate, triphenyltin-2-ethylhexatate, triphenyltin naphthenate, triphenyltin acetate, triphenyltin acrylate, tri-n-butyltin laurate, tri-n-butyltin-2-ethyl-hexatate, tri-n-butyltin naphthenate, tri-n-butyltin acetate, tri-n-butyltin acrylate, tri-t-butyltin laurate, tri-t-butyltin-2-ethylhexatate, tri-t-butyltin naphthenate, tri-t-butyltin acetate, tri-t-butyltin acrylate, triisobutyltin laurate, triisobutyltin-2-ethylhexatate, triisobutyltin naphthenate, triisobutyltin acetate, triisobutyltin acrylate, triisopropyltin laurate, triispropyltin-2-ethylhexatate, triisopropyltin napthenate, triisopropyltin acetate, triisopropyltin acrylate, trihexyltin laurate, trihexyltin-2-ethylhexatate, trihexyltin acetate, trihexyltin acrylate, trioctyltin laurate, trioctyltin-2-ethylhexatate, trioctyltin napthenate, trioctyltin acetate, trioctyltin acrylate, tri-2-ethylhexyltin laurate, tri-2-ethylhexyltin-2-ethylhexatate, tri-2-ethylhexyltin naphthenate, tri-2-ethylhexyltin acetate, tri-2-ethylhexyltin acrylate, tristearyltin laurate, tristearyltin-2-ethylhexatate, tristearyltin naphthenate, tristearyltin acetate, tristearyltin acrylate, tribenzyltin laurate, tribenzyltin-2-ethylhexatate, tribenzyltin naphthenate, tribenzyltin acetate, tribenzyltin acrylate, diphenyltin dilaurate, diphenyltin-2-ethylhexatate, diphenyltin distearate, diphenyltin dinaphthenate, diphenyltin diacetate, diphenyltin diacrylate, di-n-butyltin dilaurate, di-n-butyltin di-2-ethylhexatate, di-n-butyltin distearate, di-n-butyltin dinaphthenate, di-n-butyltin diacetate, di-n-butyltin diacrylate, di-t-butyltin dilaurate, di-t-butyltin di-2-ethylhexatate, di-t-butyltin distearate, di-t-butyltin dinaphthenate, di-t-butyltin diacetate, dit-butyltin diacrylate, diisobutyltin dilaurate, diisobutyltin di-2-ethylhaxatate, diisobutyltin distearate, diisobutyltin dinaphthenate, diisobutyltin diacetate, diisobutyltin diacrylate, diisopropyltin dilaurate, diisopropyltin di-2-ethylhexatate, diisopropyltin distearate, diisopropyltin dinaphthenate, diisopropyltin diacetate, diisopropyltin diacrylate, dihexyltin dilaurate, dihexyltin di-2-ethylhexatate, dihexyltin distearate, dihexyltin dinaphthenate, dihexyltin diacetate, dihexyltin diacrylate, di-2-ethylhexyltin dilaurate, di-2-ethylhexyltin-di-2-ethylhexatate, di-2-ethylhexyltin distearate, di-2-ethylhexyltin dinaphthenate, di-2-ethylhexyltin diacetate, di-2-ethylhexyltin diacrylate, dioctyltin dilaurate, dioctyltin di-2-ethylhexatate, dioctyltin distearate, dioctyltin dinaphthenate, dioctyltin diacetate, dioctyltin diacrylate, distearyltin dilaurate, distearyltin di-2-ethylhexatate, distearyltin distearate, distearyltin dinaphthenate, distearyltin diacetate, distearyltin diacrylate, dibenzyltin dilaurate, dibenzyltin di-2-ethylhexatate, dibenzyltin distearate, dibenzyltin dinaphthenate, dibenzyltin diacetate, dibenzyltin diacrylate, phenyltin trilaurate, phenyltin tri-2-ethylhexatate, phenyltin trinaphthenate, phenyltin triacetate, phenyltin triacrylate, n-butyltin trilaurate, n-butyltin tri-2-ethylhexatate, n-butyltin trinaphthenate, n-butyltin triacetate, n-butyltin triacrylate, t-butyltin trilaurate, t-butyltin tri-2-ethylhexatate, t-butyltin trinaphthenate, t-butyltin triacetate, t-butyltin triacrylate, isobutyltin trilaurate, isobutyltin tri-2-ethylhexatate, isobutyltin trinapthenate, isobutyltin triacetate, isobutyltin triacrylate, isopropyltin trilaurate, isopropyltin tri-2-ethylhexatate, isopropyltin trinaphthenate, isopropyltin triacetate, isopropyltin triacrylate, hexyltin trilaurate, hexyltin tri-2-ethylhexatate, hexyltin trinaphthenate, hexyltin triacetate, hexyltin triacrylate, octyltin trilaurate, octyltin tri-2-ethylhexatate, octyltin trinaphthenate, octyltin triacetate, octyltin triacrylate, 2-ethylhexyltin trilaurate, 2-ethylhexyltin tri-2-ethylhexatate, 2-ethylhexyltin trinaphthenate, 2-ethylhexyltin triacetate, 2-ethylhexyltin triacrylate, stearyltin trilaurate, stearyltin tri-2-ethylhexatate, stearyltin trinaphthenate, stearyltin triacetate, stearyltin triacrylate, benzyltin trilaurate, benzyltin tri-2-ethylhexatate, benzyltin trinaphthenate, benzyltin triacetate, benzyltin triacrylate and the like.

Further, the compounds represented by the abovementioned formula (XVI) include, for example, diphenyltin bismethylmaleate, diphenyltin bis-2-ethylhexatate, diphenyltin bisoctylmaleate, diphenyltin bis(octylmaleate), diphenyltin bisbenzylmaleate, di-n-butyltin bismethylmaleate, di-n-butyltin bis-2-ethylhexatate, di-n-butyltin bisoctylmaleate, di-n-butyltin bisbenzylmaleate, di-t-butyltin bismethylmaleate, di-t-butyltin bis-2-ethylhexatate, dit-butyltin bisoctylmaleate, di-t-butyltin bisbenzylmaleate, diisobutyltin bismethylmaleate, diisobutyltin bis-2-ethyl-hexatate, diisobutyltin bisoctylmaleate, diisobutyltin bisbenzylmaleate, diisopropyltin bismethylmaleate, diisopropyltin bis-2-ethylhexatate, diisopropyltin bisoctylmaleate, diisopropyltin bisbenzylmaleate, dihexyltin bismethylmaleate, dihexyltin bis-2-ethylhexatate, dihexyltin bisoctylmaleate, dihexyltin bisbenzylmaleate, di-2-ethylhexyltin bismethylmaleate, di-2-ethylhexyltin bis-2-ethyl-hexatate, di-2-ethylhexyltin bisoctylmaleate, di-2-ethylhexyltin bisbenzylmaleate, dioctyltin bismethylmaleate, dioctyltin bis-2-ethylhexatate, dioctyltin bisoctylmaleate, dioctyltin bisbenzylmaleate, distearyltin bismethylmaleate, distearyltin bis-2-ethylhexatate, distearyltin bisoctylmaleate, distearyltin bisbenzylmaleate, dibenzyltin bismethylmaleate, dibenzyltin bis-2-ethylhexatate, dibenzyltin bisoctylmaleate, dibenzyltin bisbenzylmaleate, diphenyltin bismethyladitate, diphenyltin bis-2-ethylhexatate, diphenyltin bisoctyladitate, diphenyltin bisbenzyladitate, di-n-butyltin bismethyladitate, di-n-butyltin bis-2-ethyl-hexatate, di-n-butyltin bisoctyladitate, di-n-butyltin bisbenzyladitate, di-t-butyltin bismethyladitate, di-t-butyltin bis-2-ethylhexatate, di-t-butyltin bisoctyladitate, di-t-butyltin bisbenzyladitate, diisobutyltin bismethyladitate, diisobutyltin bis-2-ethylhexatate, diisobutyltin bisoctyladitate, diisobutyltin bisbenzyladitate, diisopropyltin bismethyladitate, diisopropyltin bis-2-ethyl-hexatate, diisopropyltin bisoctyladitate, diisopropyltin bisbenzyladitate, dihexyltin bismethyladitate, dihexyltin bis-2-ethylhexatate, dihexyltin bismethyladitate, dihexyltin bisbenzyladitate, di-2-ethylhexyltin bismethyladitate, di-2-ethylhexyltin bis-2-ethylhexatate, di-2-ethylhexyltin bisoctyladitate, di-2-ethylhexyltin bisbenzyladitate, dioctyltin bismethyladitate, dioctyltin bis-2-ethylhexatate, dioctyltin bisoctyladitate, dioctyltin bisbenzyladitate, distearyltin bismethyladitate, distearyltin bis-2-ethylhexatate, distearyltin bisoctyladitate, distearyltin bisbenzyladitate, dibenzyltin bismethyladitate, dibenzyltin bis-2-ethylhexatate, dibenzyltin bisoctyladitate, dibenzyltin bisbenzyladitate and the like.

Furthermore, the compounds represented by the above-mentioned formula (XVII) include, for example, diphenyltin maleate, di-n-butyltin maleate, di-t-butyltin maleate, diisobutyltin maleate, diisopropyltin maleate, dihexyltin maleate, di-2-ethylhexyltin maleate, dioctyltin maleate, distearyltin maleate, dibenzyltin maleate, diphenyltin aditate, di-n-butyltin aditate, di-t-butyltin aditate, diisobutyltin aditate, diisopropyltin aditate, dihexyltin diacetate, di-2-ethylhexyltin aditate, dioctyltin aditate, distearyltin aditate, dibenzyltin aditate and the like.
The compounds of the components (e) to (j) described above (hereinafter also referred to as "modifiers") can be used either alone or as a mixture of two or more of them.

Here, the amount of the modifier used to the component (a) is from 0.01 to 200, and preferably from 0.1 to 150, as the molar ratio. Less than 0.01 results in insufficient proceeding of reaction and no expression of the effect of improving wear resistance and cold flow. On the other hand, even when the modifier is used exceeding 200, the effect of improving the properties is saturated, which is economically unfavorable, and toluene-insoluble matter (gel) is undesirably formed in some cases.
It is desirable that this modification reaction is carried out at a temperature of +160 °C or lower, preferably -30°C to +130°C, for 0.1 to 10 hours, preferably 0.2 to 5 hours, under stirring.

The desired polymer can be recovered by inactivating the catalyst after the modification reaction, adding a polymerization stabilizer to the reaction system, as needed, and conducting a desolvation and drying operation known in the production of the conjugated diene-based polymer.

### (B) Thermoplastic Resin

The thermoplastic resins (B) include, for example, an aminoacrylamide polymer, a crystalline polyolefin resin and a maleic anhydride graft polymer thereof, an amorphous polyolefin resin and a maleic anhydride graft polymer thereof, polyisobutylene, an ethylene-vinyl chloride polymer, an ethylene-vinyl alcohol polymer and an ionomer thereof, an ethylene-vinyl acetate copolymer, polyethylene oxide, an ethylene-acrylic acid copolymer, polyisobutylene and an maleic anhydride graft polymer thereof, chlorinated polypropylene, a 4-methylpentene-1 resin, polystyrene, an ABS resin, an ACS resin, an AS resin, an AES resin, an ASA resin, an MBS resin, an acrylic resin, a methacrylic resin, a vinyl chloride resin, a vinylidene chloride resin, a polyamide resin, a polycarbonate, an acrylic resin, a methacrylic resin, a vinyl chloride resin, a vinylidene chloride resin, a vinyl alcohol resin, a vinyl acetal resin, a methyl methacrylate resin, a fluorocarbon resin, a polyether resin, polyethylene terephthalate, a polyacrylic ester, a polyamide resin, a hydrogenated diene-based polymer and the like. Preferred examples thereof include a crystalline polyolefin-based resin (b1), an amorphous polyolefin resin (b2) and a hydrogenated diene-based polymer (b3).

Of the thermoplastic resins (B), the crystalline polyolefin-based resin (b1) (hereinafter also briefly referred to as "crystalline polymer (b1)" is not particularly limited. However, one containing an α-olefin as a main component is preferably used. That is to say, when the whole above-mentioned crystalline polymer (b1) is taken as 100 mol%, it is preferred that the α-olefin is contained in an amount of 80 mol% or more (preferably 90 mol% or more). The above-mentioned crystalline polymer (b1) may be a homopolymer of the α-olefin, a copolymer of two or more kinds of α-olefins, or a copolymer with a monomer other than the α-olefin. Further, it may be a mixture of two or more kinds of these different polymers and/or copolymers.

As the α-olefin constituting the above-mentioned crystalline polymer (b1), it is preferred that an α-olefin having 2 or more carbon atoms is used, and it is more preferred that an α-olefin having 2 to 12 carbon atoms is used.

The α-olefins as used herein include an α-olefin having 2 to 12 carbon atoms such as ethylene, propene (hereinafter referred to as "propylene"), 1-butene, 1-pentene, 3-methyl-1-butene, 1-hexene, 3-methyl-1-pentene, 4-methyl-1-pentene, 3-ethyl-1-pentene, 1-octene, 1-decene or 1-undecene, and can be used either alone or as a mixture of two or more of them. Of these, an organic peroxide decay type propylene and/or 1-butene is preferably used.

When the polymer constituting the above-mentioned crystalline polymer (b1) is a copolymer, this copolymer may be either a random copolymer or a block copolymer. However, in order to obtain the following degree of crystallinity, the total content of constituent units except the α-olefin is preferably 15 mol% or less (more preferably 10 mol% or less) for the random copolymer, when the whole random copolymer is taken as 100 mol%. Further, for the block copolymer, the total content of constituent units except the α-olefin is preferably 40 mol% or less (more preferably 20 mol% or less), when the whole block copolymer is taken as 100 mol%.

Such a random copolymer can be obtained, for example, by a polymerization method according to an intermediate-low pressure method such as a method of polymerizing the α-olefin under the presence of a catalyst comprising a solvent containing a Ziegler-Natta catalyst, a soluble vanadium compound and an organoaluminum compound, while supplying hydrogen as a molecular weight modifier as needed. Further, the polymerization can also be conducted by a gas phase method (a fluidized bed or a stirring bed) or a liquid phase method (a slurry method or a solution method).

As the above-mentioned soluble vanadium compound, there is preferably used, for example, a reaction product of at least one of VOCl₃ and VCl₄ with an alcohol. As the alcohols, there can be used methanol, ethanol, n-propanol, isopropanol, n-butanol, sec-butanol, t-butanol, n-hexanol, n-octanol, 2-ethylhexanol, n-decanol, n-dodecanol and the like. Of these, alcohols having 3 to 8 carbon atoms are preferably used.

Further, the above-mentioned organoaluminum compounds include, for example, triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, methylaluminoxane which is a reaction product of trimethylaluminum with water, and the like. Of these, there are particularly preferably used ethylaluminum sesquichloride, butylaluminum sesquichloride, a mixture of ethylaluminum sesquichloride and triisobutylaluminum, and a mixture of triisobutylaluminum and butylaluminum sesquichloride.
Furthermore, as the above-mentioned solvents, hydrocarbons are preferably used. Of these, n-pentane, n-hexane, n-heptane, n-octane, isooctane and cyclohexane are particularly preferably used. These can be used either alone or as a combination of two or more thereof.
Moreover, the block copolymer as described above can be obtained by living polymerization using a Ziegler-Natta catalyst.

Further, the above-mentioned crystalline polymer (b1) has crystallinity. This crystallinity is preferably 50% or more (more preferably 53% or more, and still more preferably 55% or more) as the degree of crystallinity according to X-ray diffraction measurement. Furthermore, this degree of crystallinity is closely related to the density. For example, in the case of polypropylene, the density of an α type crystal (the monoclinic system) is 0. 936 g/cm³, the density of a smetica type microcrystal (the pseudo-hexagonal system) is 0.886 g/cm³, and the density of an amorphous (atactic) component is 0.850 g/cm³. Moreover, in the case of poly-1-butene, the density of an isotactic crystal component is 0.91 g/m³, and the density of an amorphous (atactic) component is 0.87 g/cm³.
Accordingly, when it is intended to obtain crystalline polymer (b1) having a degree of crystallinity of 50% or more, the density is preferably adjusted to 0.89 g/cm³ or more (more preferably from 0.90 to 0.94 g/cm³). When the degree of crystallinity is less than 50% and the density is less than 0.89 g/cm³, the heat resistance and strength tend to decrease.

Further, the maximum peak temperature of the above-mentioned crystalline polymer (b1) by differential scanning calorimetry, that is to say, the melting point (hereinafter briefly referred to as "Tₘ") , is preferably 100°C or higher (more preferably 120°C or higher). When Tₘ is less than 100°C, the sufficient heat resistance and strength tend not to be exhibited. Furthermore, although the above-mentioned Tₘ varies depending on the constituent monomer, it is preferably 120°C or higher.
In addition, the melt flow rate (at a temperature of 230°C and a load of 2.16 kg) (hereinafter briefly referred to as "MFR") is from 0.1 to 1,000 g/10 minutes (preferably from 0.5 to 500 g/10 minutes, and more preferably from 1 to 100 g/10 minutes). When MFR is less than 0.1 g/10 minutes, the kneading processability, extrusion processability and the like of an elastomer composition tend to become insufficient. On the other hand, exceeding 1,000 g/10 minutes results in the tendency of the strength to decrease.

Accordingly, as the above-mentioned crystalline polymer (b1), there is particularly preferably used polypropylene and/or a copolymer of propylene and ethylene having a degree of crystallinity of 50% or more, a density of 0.89 g/cm³ or more, an ethylene unit content of 20 mol% or more, a Tₘ of 100°C or higher, an MFR of 0.1 to 100 g/10 minutes and a melting point of 140 to 170°C.

Of the above-mentioned thermoplastic resins (B), the above-mentioned amorphous polyolefin-based resin (b2) (hereinafter also briefly referred to as "amorphous polymer (b2)" is not particularly limited. However, one containing an α-olefin as a main component is preferably used. That is to say, when the whole above-mentioned amorphous polymer (b2) is taken as 100 mol%, it is preferred that the α-olefin is contained in an amount of 50 mol% or more (preferably 60 mol% or more). The above-mentioned amorphous polymer (b2) may be a homopolymer of the α-olefin, a copolymer of two or more kinds of α-olefins, or a copolymer with a monomer other than the α-olefin. Further, it may be a mixture of two or more kinds of these different polymers and/or copolymers.
As the α-olefin constituting the above-mentioned amorphous polymer (b2), it is preferred that an α-olefin having 3 or more carbon atoms is used, and it is more preferred that a similar α-olefin having 3 to 12 carbon atoms as exemplified in the above-mentioned crystalline polymer (b1) is used.

The above-mentioned amorphous polymer (b2) include a homopolymer such as atactic polypropylene or atactic poly-1-butene, a copolymer of propylene (containing 50 mol% or more) and another α-olefin (such as ethylene, 1-butene, 1-pentene, 1-hexene, 4-methyl-1-pentene, 1-octene or 1-decene), a copolymer of 1-butene (containing 50 mol% or more) and another α-olefin (such as ethylene, propylene, 1-pentene, 1-hexene, 4-methyl-1-pentene, 1-octene or 1-decene), and the like.

When the polymer constituting the above-mentioned amorphous polymer (b2) is a copolymer, this copolymer may be either a random copolymer or a block copolymer. However, in the case of the block copolymer, an α-olefin unit which constitutes a main component (propylene or 1-butene in the above-mentioned copolymer) is required to be bonded by an atactic structure. Further, when the above-mentioned amorphous polymer (b2) is a copolymer of an α-olefin having 3 or more carbon atoms and ethylene, the α-olefin content is preferably 50 mol% or more (more preferably from 60 to 100 mol%), taking the whole copolymer as 100 mol%.

As the above-mentioned amorphous polymer (b2), there is particularly preferably used atactic polypropylene (the propylene content: 50 mol% or more), a copolymer of propylene (containing 50 mol% or more) and ethylene, or a copolymer of propylene and 1-butene.
This atactic polypropylene can be obtained as a by-product of polypropylene which can be used as the above-mentioned crystalline polymer (b1).
Further, atactic polypropylene and atactic poly-1-butene can also be obtained by polymerization using a zirconocene compound-methylaluminoxane catalyst.
Furthermore, the above-mentioned random copolymer can be obtained by the same method as used for the above-mentioned crystalline polymer (b1). Moreover, the above-mentioned block copolymer can be obtained by living polymerization using a Ziegler-Natta catalyst.

Further, the above-mentioned amorphous polymer (b2) preferably has a degree of crystallinity according to X-ray diffraction measurement of less than 50% (more preferably 30% or less, and still more preferably 20% or less). This degree of crystallinity is closely related to the density similarly to the above, and preferably from 0.85 to 0.89 g/cm³ (more preferably from 0.85 to 0.88 g/cm³).
Furthermore, the number average molecular weight Mₙ of this amorphous polymer (b2) is preferably from 1,000 to 20, 000 (more preferably from 1,500 to 15,000).

Further, the hydrogenated diene-based polymers (b3) include, for example, a hydrogenated product of a diene-based polymer (hereinafter also referred to as "a polymer before hydrogenation") such as a homopolymer of a conjugated diene monomer, a random copolymer of a conjugated diene monomer and a vinyl aromatic monomer, a block copolymer comprising a polymer block of a vinyl aromatic monomer and a polymer block of a conjugated diene monomer, a block copolymer comprising a polymer block of a vinyl aromatic monomer and a random copolymer block of a conjugated diene monomer and a vinyl aromatic monomer, a block copolymer comprising a polymer block of a conjugated diene monomer and a copolymer block of a conjugated diene monomer and a vinyl aromatic monomer, a block copolymer comprising a polymer block of a conjugated diene monomer and a tapered block composed of a vinyl aromatic monomer and a conjugated diene monomer with the vinyl aromatic monomer gradually increasing, a block copolymer comprising a random copolymer block of a conjugated diene monomer and a vinyl aromatic monomer and a tapered block composed of a vinyl aromatic monomer and a conjugated diene monomer with the vinyl aromatic monomer gradually increasing, or a block copolymer comprising a polybutadiene block having a vinyl bond content of 30% by weight or less and a polymer block of a conjugated diene monomer having a vinyl bond content of more than 30% by weight.

The conjugated diene compounds include 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, chloroprene and the like. It is preferred to use 1, 3-butadiene, isoprene and 1,3-pentadiene among others, and it is particularly preferred to use 1,3-butadiene.
The vinyl aromatic compounds include styrene, tert-butylstyrene, α-methylstyrene, p-methylstyrene, p-ethylstyrene, divinylbenzene, 1,1-diphenylstyrene, vinylnaphthalene, vinylanthracene, N,N-diethyl-p-aminoethyl-styrene, vinylpyridine and the like. Of these, styrene is preferred.

Conjugated diene units of such conjugated diene polymers or conjugated diene-vinyl aromatic compound random copolymers include a conjugated diene unit having an olefinic unsaturated bond in a side chain and a conjugated diene unit having an olefinic unsaturated bond in a main chain, depending on the polymerization site of the conjugated diene. The ratio of the number of the conjugated diene units having an olefinic unsaturated bond in a side chain to the number of the total conjugated diene units is usually within the range of 5 to 95%, preferably 30 to 95%, and more preferably 40 to 90%.

Such a conjugated diene polymer and conjugated diene-vinyl aromatic compound random copolymer can both be easily produced by known methods. For example, for the production of the conjugated diene polymer, the conjugated diene is polymerized in a hydrocarbon-based solvent by living anionic polymerization, as described in JP-A-2-36244, and for the production of the conjugated diene-vinyl aromatic random copolymer, the conjugated diene and the vinyl aromatic compound are polymerized similarly by living anionic polymerization.

In the living anionic polymerization, an initiator such as an organic lithium compound or an organic sodium compound is used. For example, an alkyllithium such as n-butyllithium, sec-butyllithium or t-butyllithium is preferred. The hydrocarbon-based solvents include, for example, hexane, heptane, methylcyclopentane, cyclohexane, benzene, toluene, xylene, 2-methylbutene-1, 2-methylbutene-2 and the like. The system of the living anionic polymerization may be either a batch system or a continuous system, and the polymerization temperature is usually within the range of 0 to 120°C.

In the above-mentioned living anionic polymerization, for example, an ether, a tertiary amine, an alkoxide, phenoxide or sulfonate of an alkali metal such as sodium or potassium, or the like is used together, and the kind thereof, the amount thereof used and the like are appropriately selected, thereby being able to easily control the ratio of the number of the conjugated diene units having an olefinic unsaturated bond in a side chain to the number of the total conjugated diene units in the resulting conjugated diene polymer or conjugated diene-vinyl aromatic compound copolymer.

Further, a multifunctional coupling agent or a crosslinking agent is added just before the termination of the polymerization to allow a coupling reaction or crosslinking, thereby being also able to increase the molecular weight of the polymer. Such coupling agents include, for example, divinylbenzene, 1,2,4-trivinylbenzene, epoxidated 1,2-polybutadiene, epoxidated soybean oil, epoxidated linseed oil, benzene-1,2,4-triisocyanate, diethyl oxalate, diethyl malonate, diethyl adipate, dioctyl adipate, dimethyl phthalate, diethyl phthalate, diethyl terephthalate, diethyl carbonate, 1,1,2,2-tetrachloroethane, 1,4-bis(trichloromethyl)benzene, trichlorosilane, methyltrichlorosilane, butyltrichlorosilane, tetrachlorosilane, (dichloromethyl)trichlorosilane, hexachlorodisilane, tetraethoxysilane, tetrachlorotin, 1,3-dichloro-2-propanone and the like. Of these, divinylbenzene, epoxidated 1,2-polybutadiene, trichlorosilane, methyltrichlorosilane and tetrachlorosilane are preferred. As the crosslinking agents, there are exemplified divinylbenzene, diethyl adipate, epoxidated liquid butadiene, epoxidated soybean oil, epoxidated linseed oil, tolylene diisocyanate, diphenylmethane diisocyanate , 1,2,4-benzene triisocyanate and the like, respectively.

For the hydrogenation of such a conjugated diene polymer or conjugated diene-vinyl aromatic compound random copolymer, for example, the conjugated diene polymer or conjugated diene-vinyl aromatic compound random copolymer is allowed to react in a hydrocarbon-based solvent at a hydrogen pressure of 1 to 100 kg/cm² and a temperature of -10 to 150°C under the presence of a hydrogenation catalyst, as described in JP-A-2-36244.

As the hydrogenation catalyst, there can be used a compound containing any one of metals of Groups Ib, IVb, Vb, VIb, VIIb and VIII in the Periodic Table, for example, a compound containing a Ti, V, Co, Ni, Zr, Ru, Rh, Pd, Hf, Re or Pt atom. Specific examples thereof include a metallocene-based compound of Ti, Zr, Hf, Co, Ni, Pd, Pt, Ru, Rh, Re or the like, a carrier type heterogeneous catalyst in which a metal such as Pd, Ni, Pt, Rh or Ru is carried on a carrier such as carbon, silica, alumina or diatomaceous earth, a homogeneous Ziegler type catalyst in which an organic salt or acetylacetone salt of a metal element such as Ni or Co is combined with a reducing agent such as an organic aluminum, an organic metal compound of Ru, Rh or the like or a complex thereof, a fullerene or carbon nanotube in which hydrogen is occluded, and the like. Of these, a metallocene compound containing any one of Ti, Zr, Hf, Co and Ni is preferred in that the hydrogenation reaction can be performed in an inert organic solvent in a homogeneous system. Further, a metallocene compound containing any one of Ti, Zr and Hf is preferred. In particular, a hydrogenation catalyst obtained by reacting a titanocene compound with an alkyllithium is preferred, because it is an inexpensive and particularly industrially useful catalyst. The above-mentioned hydrogenation catalysts may be used either alone or as a combination of two or more of them. After the hydrogenation, a residue of the catalyst is removed as needed, or a phenolic or amine-based antiaging agent is added, and then, the hydrogenated diene-based copolymer of the present invention is isolated from a hydrogenated diene-based copolymer solution. The isolation of the hydrogenated diene-based copolymer can be performed, for example, by a method of adding acetone, an alcohol or the like to the hydrogenated diene-based copolymer solution to allow the copolymer to precipitate, a method of pouring the hydrogenated diene-based copolymer solution into hot water with stirring, and removing the solvent by distillation, or the like.

The olefinic unsaturated bond in the side chain or main chain contained in the conjugated diene unit of the conjugated diene polymer or conjugated diene-vinyl aromatic compound random copolymer is hydrogenated by such hydrogenation to obtain the hydrogenated diene-based polymer shown in the above (A). The degree of hydrogenation in such a hydrogenated diene-based polymer is required to be 70% or more. The degree of hydrogenation as used herein indicates a value showing the ratio of the number of the hydrogenated olefinic unsaturated bonds in the side chains or main chains to the number of the olefinic unsaturated bonds in the side chains or main chains of the conjugated diene units before the hydrogenation, and is preferably 90% or more, and more preferably 95% or more. Such a hydrogenated diene-based polymer may be crosslinked. Crosslinking of the hydrogenated diene-based polymer can be performed by known methods.

Specific examples of the above-mentioned hydrogenated diene-based polymers (b3) include a hydrogenated styrene-butadiene random copolymer, a hydrogenated isoprene-styrene random copolymer, a hydrogenated styrene-butadiene block copolymer, a styrene-butadiene-styrene block copolymer, a hydrogenated styrene-butadiene-isoprene block copolymer, a hydrogenated butadiene block copolymer and the like.
The names of goods on the market of such hydrogenated diene-based polymers (b3) include Septon and Hybrar manufactured by Kuraray Co. , Ltd, Tuftec manufactured by Asahi Kasei Corporation, Dynaron manufactured by JSR Corporation, Kraton manufactured by Kraton Polymers, and the like.

As the above-mentioned thermoplastic resin (B) , there may be used either any one of the above-mentioned polyolefin-based resin (b1), the above-mentioned amorphous polyolefin-based resin (b2) and the above-mentioned hydrogenated diene-based polymer (b3), or two or more of them in combination.

The compounding amounts of the conjugated diene-based polymer (A) and the thermoplastic resin (B) are from 50 to 95 parts by weight and preferably from 55 to 96 parts by weight for the component (A), and from 50 to 5 parts by weight and preferably from 45 to 6 parts by weight for the component (B) [provided that (A)+(B)=100 parts by weight]. When the compounding amount of the component (A) is less than 50 parts by weight, the flexibility and elasticity of the resulting thermoplastic elastomer composition tends to decrease. On the other hand, when the compounding amount of the above-mentioned component (A) exceeds 95 parts by weight, the fluidity of the thermoplastic elastomer composition finally obtained unfavorably decreases to cause the possibility of significantly deteriorating forming processability.
Further, when the compounding amount of the above-mentioned thermoplastic resin (B) is less than 5 parts by weight, the phase structure (morphology) of the thermoplastic elastomer composition finally obtained does not become a good sea-island structure [the thermoplastic resin (B) is a sea (matrix), and a crosslinked elastomer component is an island (domain)], resulting in the possibility of deteriorating the forming processability and mechanical properties. On the other hand, exceeding 50 parts by weight unfavorably results in a decrease in the flexibility and rubber elasticity of the resulting thermoplastic elastomer composition.

### (C) Crosslinking Agent

The thermoplastic elastomer composition of the present invention is obtained as the TPE not dynamically crosslinked by melt kneading the above-mentioned conjugated diene-based polymer (A) and thermoplastic resin (B) . However, preferably, the dynamically crosslinked elastomer (TPV) can be formed by dynamic heat treatment of the components (A) and (B) under the presence of the crosslinking agent (C).
The above-mentioned crosslinking agents (C) used for crosslinking herein include, for example, an organic peroxide, a phenol resin crosslinking agent, sulfur, a sulfur compound, a p-quinone, a p-quinonedioxime derivative, a bismaleimide compound, an epoxy compound, a silane compound, an amino resin, a polyol crosslinking agent, a polyamine, a triazine compound, a metal soap and the like. In particular, an organic peroxide and a phenol resin crosslinking agent are preferably used.

Examples of the above-mentioned organic peroxides include 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butyl-peroxy)hexane, 2,2'-bis(t-butylperoxy)-p-isopropylbenzene, dicumyl peroxide, di-t-butyl peroxide, t-butyl peroxide, p-menthane peroxide, 1,1-bis(t-butylperoxy)-3,3,5-trimethylcyclohexane, dilauroyl peroxide, diacetyl peroxide, t-butyl peroxybenzoate, 2,4-dichlorobenzoyl peroxide, p-chlorobenzoyl peroxide, benzoyl peroxide, di(t-butylperoxy) perbenzoate, n-butyl-4,4-bis(t-butylperoxy) valerate, t-butylperoxyisopropyl carbonate and the like. Of these, ones having relatively high decomposition temperatures, such as 1,3-bis(t-butylperoxyisopropyl)benzene, 2,5-dimethyl-2,5-di(t-butylperoxy)hexyne-3 and 2,5-dimethyl-2,5-di (t-butylperoxy)hexane, are preferably used.
These organic peroxides can be used either alone or as a mixture of two or more of them.

Further, when the organic peroxide is used as the above-mentioned crosslinking agent, the crosslinking reaction can be mildly conducted by using it together with a crosslinking assistant, and particularly uniform crosslinking can be formed.
The crosslinking assistants include sulfur or a sulfur compound (such as powdered sulfur, colloidal sulfur, precipitated sulfur, insoluble sulfur, surface-treated sulfur or dipentamethylenethiuram tetrasulfide), an oxime compound (such as p-quinone oxime or p,p'-dibenzoylquinone oxime), a multifunctional monomer (such as ethylene glycol di(meth)-acrylate, diethylene glycol di(meth)acrylate, triethylene glycol di(meth)acrylate, tetraethylene glycol di(meth)-acrylate, polyethylene glycol di(meth)acrylate, trimethylolpropane tri(meth)acrylate, diallyl phthalate, tetraallyloxyethane, triallyl cyanurate, N,N'-m-phenylene-bismaleimide, N,N'-toluylenebismalemide, maleic anhydride, divinylbenzene or zinc di(meth)acrylate) and the like. Of these, particularly, p,p'-dibenzoylquinone oxime, N,N'-m-phenylenebismaleimide and divinylbenzene are preferably used.
These crosslinking assistants can be used either alone or as a mixture of two or more of them.
Of the crosslinking assistants, N,N'-m-phenylene-bismaleimide can also be used as the crosslinking agent, because it has an action as the crosslinking agent.

When the organic peroxide is used as the above-mentioned crosslinking agent, the amount thereof used can be from 0.05 to 10 parts by weight, and preferably from 0.1 to 5 parts by weight, based on 100 parts by weight of the total amount of the above-mentioned components (A) and (B). When the amount of the organic peroxide used is less than 0.05 part by weight, the degree of crosslinking is insufficient to cause the possibility of deteriorating the rubber elasticity and mechanical strength of the thermoplastic elastomer composition finally obtained. On the other hand, exceeding 10 parts by weight results in an excessively high degree of crosslinking to cause the tendency of the forming processability to deteriorate or the mechanical properties to decrease.
Further, when the organic peroxide is used as the above-mentioned crosslinking agent, the amount of the crosslinking assistant used can be preferably less than 10 parts by weight, and more preferably from 0.2 to 5 parts by weight, based on 100 parts by weight of the total amount of the above-mentioned components (A) and (B). When the amount of the crosslinking assistant used exceeds 10 parts by weight, the degree of crosslinking becomes excessively high to cause the tendency of the forming processability to deteriorate or the mechanical properties to decrease.

Further, the above-mentioned phenolic crosslinking agents include, for example, a p-substituted phenolic compound represented by the following general formula (XVIII), an o-substituted phenol-aldehyde condensate, a m-substituted phenol-aldehyde condensate, a brominated alkylphenolaldehyde condensate and the like, and particularly, a p-substituted phenolic compound is preferably used.

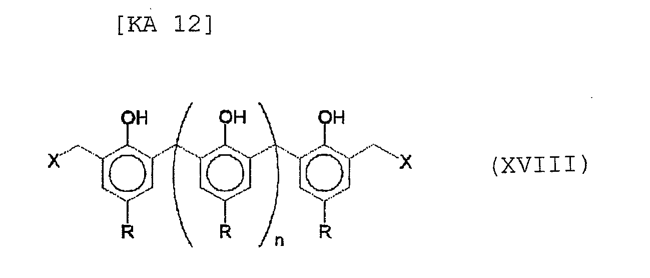

wherein n is an integer of 0 to 10, X is at least any one of a hydroxyl group, a halogenated alkyl group and a halogen atom, and R is a saturated hydrocarbon having 1 to 15 carbon atoms.

The p-substituted phenolic compound is obtained by the condensation reaction of a p-substituted phenol with an aldehyde (preferably formaldehyde) under the presence of an alkali catalyst. When the phenolic crosslinking agent is used as the above-mentioned crosslinking agent, the amount thereof used can be preferably from 0.2 to 10 parts by weight, and more preferably from 0.5 to 5 parts by weight, based on 100 parts by weight of the total amount of the above-mentioned components (A) and (B) . When the amount of the phenolic crosslinking agent used is less than 0.2 part by weight, the degree of crosslinking is insufficient to cause the possibility of deteriorating the rubber elasticity and mechanical strength of the thermoplastic elastomer composition finally obtained. On the other hand, exceeding 10 parts by weight results in the tendency of the forming processability of the thermoplastic elastomer composition finally obtained to deteriorate.

These phenolic crosslinking agents can also be used alone. However, in order to control the rate of crosslinking, a crosslinking accelerator can be used together. The crosslinking accelerators include a metal halide (such as stannous chloride or ferric chloride), an organic halide (such as chlorinated polypropylene, brominated butyl rubber or chloroprene rubber) and the like. Further, in addition to the crosslinking accelerator, it is more desirable to use a metal oxide such as zinc oxide or a dispersant such as stearic acid together.

### (D) Other Additives

The thermoplastic elastomer composition of the present invention can be allowed to contain a polymer compound selected from a rubber and a thermoplastic elastomer other than the above-mentioned components (A) and (B).
Such polymer compounds are not particularly limited, as long as they are other than specific functional group-containing copolymers, and specific examples thereof include an ethylene-α-olefin copolymer rubber and a maleic anhydride graft polymer thereof, an ethylene-α-olefin-non-conjugated diene copolymer rubber, a styrene-butadiene rubber, a Ni catalyst polymerized butadiene rubber, an isoprene rubber, a styrene-isoprene rubber, a nitrile rubber and a hydrogenated product thereof, an acrylic rubber, a silicone rubber, a fluororubber, a butyl rubber, a natural rubber, a chloroprene rubber, a norbornene rubber, a chlorosulfonated polyethylene, a urethane rubber, a polysulfide rubber epichlorohydrin rubber, a simple blend type olefinic thermoplastic elastomer, an implant type olefinic thermoplastic elastomer, a dynamic crosslinking type olefinic thermoplastic elastomer, a polyvinyl chloride-based thermoplastic elastomer, a polyurethane-based thermoplastic elastomer, a polyester-based thermoplastic elastomer, a polyamide-based thermoplastic elastomer, a fluorinated thermoplastic elastomer and syndiotactic 1,2-polybutadiene.
These polymer compounds can be used either alone or as a combination of two or more of them.
The above polymer compound may be added to the degree to which the properties of the thermoplastic elastomer composition of the present invention are not impaired, and the rate thereof used is from 0 to 30 parts by weight based on 100 parts by weight of the total amount of components (A) and (B).

In addition to the above-mentioned components (A) and (B), a softener and/or a plasticizer can be further incorporated into the thermoplastic elastomer composition of the present invention.
The softeners used in the present invention include a petroleum softener such as aromatic oil, naphthenic oil, paraffin oil, white oil, petrolatum or gilsonite, and a vegetable oil softener such as castor oil, cottonseed oil, rapeseed oil, palm oil, cocoanut oil or rosin.
Further, the plasticizers used in the present invention include a plasticizer such as di-(2-ethylhexyl) fumarate, diethylene glycol monooleate, glyceryl monoricinoleate, trilauryl phosphate, tristearyl phosphate, tri-(2-ethylhexyl) phosphate, tricresyl phosphate, epoxidized soybean oil or a polyetherester, as well as a phthalate ester such as dimethyl phthalate, diethyl phthalate, dibutyl phthalate, diisobutyl phthalate, dioctyl phthalate, butyloctyl phthalate, di-(2-ethylhexyl) phthalate, diisooctyl phthalate or diisodecyl phthalate, a fatty acid, ester such as dimethyl adipate, diisobutyl adipate, di-(2-ethylhexyl) adipate, diisooctyl adipate, diisodecyl adipate, octyldecyl adipate, di-(2-ethylhexyl) azelate, diisooctyl azelate, diisobutyl azelate, dibutyl sebacate, di-(2-ethylhexyl) sebacate or diisooctyl sebacate, and a trimellitate ester such as isodecyl trimellitate ester, octyl trimellitate ester, n-octyl trimellitate ester or isononyl trimellitate ester.
When carrying out the present invention, the above-mentioned softeners and/or plasticizers can be used either alone or as a combination of two or more kinds thereof.
Further, the above-mentioned softeners and/or plasticizers may be added to component (A) and component (B) in producing the thermoplastic elastomer composition, or in the polymerization of component (A), or in the polymerization of component (B).

The amount of the above-mentioned softener and/or plasticizer incorporated can be 100 parts by weight or less, preferably 95 parts by weight, and more preferably 90 parts by weight or less, based on 100 parts by weight of the total amount of components (A) and (B). Exceeding 100 parts by weight results in the tendency of the softener and/or plasticizer to bleed out of the thermoplastic elastomer composition finally obtained or the mechanical strength and rubber elasticity to deteriorate.

Further, the thermoplastic elastomer composition of the present invention can be allowed to contain various additives as needed, for example, a lubricant, a stabilizer such as an antiaging agent, a thermal stabilizer, an antiweathering agent, a metal deactivator, an ultraviolet absorber, a light stabilizer or a copper poisoning inhibitor, an antibacterial/mildewproofing agent, a dispersant, a crystal nucleating agent, a flame retardant, a tackifier, a foaming assistant, a colorant such as titanium oxide or carbon black, a pigment, a metal powder such as ferrite, an inorganic fiber such as glass fiber or metal fiber, carbon fiber, an organic fiber such as aramid fiber, conjugated fiber, inorganic whisker such as potassium titanate whisker, a filler such as glass beads, glass balloon, glass flakes, asbestos, mica, calcium carbonate, talc, silica, alumina, aluminasilica, calcium silicate, hydrotalcite, kaolin, diatomaceous earth, graphite, pumice, ebo powder, cotton flocks, cork powder, barium sulfate, a fluorocarbon resin or polymer beads, or a mixture thereof, a filler such as polyolefin wax, cellulose powder, rubber crumbs or wood flour, a low molecular weight polymer and the like.

### Preparation of Thermoplastic Elastomer Composition

The preparation of the thermoplastic elastomer composition of the present invention can be obtained by adding the above-mentioned compositions (A) and (B), supplying them to a continuous extruder or an enclosed blender, and dynamically heat treating the resulting mixture.

The above-mentioned "dynamically heat treating" means to perform both the application of shearing force and the heating. This dynamic heat treatment can be conducted by using, for example, a melt kneader, and the treatment conducted by the kneader may be of a batch type or a continuous type.
Of these, the apparatus which can perform kneading include, for example, an apparatus such as a mixing roll of an open type or a Banbury mixer, single-screw extruder, twin-screw extruder, twin-screw kneader or pressure kneader of a closed type. Of these, from the viewpoints of economical efficiency, treatment efficiency and the like, it is preferred to use the continuous extruder (the single-screw extruder, the twin-screw extruder or the twin-screw kneader).

The above-mentioned twin-screw extruder is not particularly limited, as long as melt kneading is possible under the presence of the above-mentioned thermoplastic elastomer composition. Examples thereof include a single-screw extruder, a twin-screw extruder and the like. Of these, a twin-screw extruder is preferably used, and more preferably, there is used a twin-screw extruder having preferably an L/D (a ratio of a screw effective length L to an outer diameter D) of 30 or more, and more preferably an L/D of 36 to 60. As the twin-screw extruder, there can be used any twin-screw extruder, for example, one in which two screws engage with each other, or one in which they do not engage. However, more preferred is one in which two screws rotate in the same direction and engage with each other.
Such twin-screw extruders include PCM manufactured by Ikegai Corporation, KTX manufactured by Kobe Steel, Ltd., TEX manufactured by The Japan Steel Works, Ltd., TEM manufactured by Toshiba Machine Co., Ltd., ZSK manufactured by Warner (all are trade names) and the like.
Further, as the above-mentioned twin-screw kneader, there is preferably used one having preferably an L/D (a ratio of a screw effective length L to an outer diameter) of 5 or more, and more preferably an L/D of 10. Furthermore, as the twin-screw kneader, there can be used any twin-screw extruder, for example, one in which two screws engage with each other, or one in which they do not engage. However, more preferred is one in which two screws rotate in different directions and engage with each other. Such twin-screw kneaders include Mixtron KTX·LCM·NCM manufactured by Kobe Steel, Ltd., CIM·CMP manufactured by The Japan Steel Works, Ltd. (all are trade names) and the like.
Moreover, two or more of the above-mentioned continuous extruders may be connected to use.

The treatment temperature in the dynamic heat treatment is from 120 to 350°C, and preferably from 150 to 290°C, and the treatment time is from 20 seconds to 320 minutes, and preferably from 30 seconds to 25 minutes. Further, the shear force applied to the mixture is from 10 to 20,000/sec, and preferably from 100 to 10,000/sec, by shear rate.

### Forming Method of Thermoplastic Elastomer Composition Formed Article

The formed article of the thermoplastic elastomer composition of the present invention can be produced by forming the above-mentioned thermoplastic elastomer composition. However, it can also be produced by mixing the conjugated diene-based polymer component (A), the thermoplastic resin component (B) and other components used as needed, under appropriate conditions, thereby performing a process of preparing the thermoplastic elastomer composition and a forming process in a single step.
The forming method of the thermoplastic elastomer composition formed article is not particularly limited, and there can be suitably utilized, for example, an extrusion molding method, a calender forming method, a solvent casting method, an injection molding method, a vacuum forming method, a powder slush molding method and a hot press method.
Further, it may be a formed article laminated or joined with a rubber, a plastic, a thermoplastic elastomer composition other than the present invention, glass, metal, cloth, wood or the like.
The rubbers as used herein include an ethylene-α-olefin copolymer rubber and a maleic anhydride graft polymer thereof, an ethylene-α-olefin-non-conjugated diene copolymer rubber, a styrene-butadiene rubber, a Ni catalyst polymerized butadiene rubber, an isoprene rubber, a nitrile rubber and a hydrogenated product thereof, an acrylic rubber, a silicone rubber, a fluororubber, a butyl rubber, a natural rubber and the like.
The plastics include an ionomer, an aminoacrylamide polymer, polyethylene and a maleic anhydride graft polymer thereof, polyisobutylene, an ethylene-vinyl chloride polymer, an ethylene-vinyl alcohol polymer, an ethylene-vinyl acetate copolymer, polyethylene oxide, an ethylene-acrylic acid copolymer, polypropylene and a maleic anhydride graft polymer thereof, polyisobutylene and an maleic anhydride graft polymer thereof, chlorinated polypropylene, a 4-methylpentene-1 resin, polystyrene, an ABS resin, an ACS resin, an AS resin, an AES resin, an ASA resin, an MBS resin, an acrylic resin, a methacrylic resin, a vinyl chloride resin, a vinylidene chloride resin, a polyamide resin, a polycarbonate, an acrylic resin, a methacrylic resin, a vinyl chloride resin, a vinylidene chloride resin, a vinyl alcohol resin, a vinyl acetal resin, a methyl methacrylate resin, a fluorocarbon resin, a polyether resin, polyethylene terephthalate, a polyacrylic ester, a polyamide resin, a polyurethane, a polyimide, a polyurea resin, epoxy resin, phenol resin, urea resin, polybutene-1, a methylpentene resin, polyacrylonitrile and the like.
The thermoplastic elastomers include a chlorinated polyethylene-based thermoplastic elastomer, syndiotactic 1,2-polybutadiene, a simple blend type olefinic thermoplastic elastomer, an implant type olefinic thermoplastic elastomer, a dynamic crosslinking type olefinic thermoplastic elastomer, a polyvinyl chloride-based thermoplastic elastomer, a polyurethane-based thermoplastic elastomer, a polyester-based thermoplastic elastomer, a polyamide-based thermoplastic elastomer, a fluorinated thermoplastic elastomer, a hydrogenated product of a styrene-butadiene rubber, a maleic anhydride graft polymer of the hydrogenated product of the styrene-butadiene rubber, a hydrogenated product of a butadiene rubber, a maleic anhydride graft polymer of the hydrogenated product of the butadiene rubber, a hydrogenated product of an isoprene rubber, a maleic anhydride graft polymer of the hydrogenated product of the isoprene rubber, a hydrogenated product of a styrene-isoprene rubber, a maleic anhydride graft polymer of the hydrogenated product of the styrene-isoprene rubber, a hydrogenated product of a styrene-butadiene block copolymer, a hydrogenated product of a styrene-isoprene block copolymer and the like.
The metals include stainless steel, aluminum, iron, copper, nickel, zinc, lead, tin, an alloy such as a nickel-zinc alloy, an iron-zinc alloy or a lead-tin alloy which is used in automobiles, ships, home electric appliances and the like, and the like.

### Examples

The present invention will be illustrated in greater detail with reference to the following examples, but the invention should not be construed as being limited to the following examples as long as it does not exceed its gist.
In the examples, parts and percentages are on a weight basis, unless otherwise stated.
Further, various measurements in the examples were made according to the following methods:

### Evaluation of Conjugated Diene-Based Polymer Mooney Viscosity (ML₁₊₄, 100°C)

It was measured at a temperature of 100°C for a measuring time of 4 minutes after preliminary heating for 1 minute.

### Number Average Molecular Weight (Mn) and Weight Average Molecular Weight (Mw)

They were measured by using HLC-8120GPC manufactured by Tosoh Corporation and a differential refractometer as a detector under the following conditions:
Column; Column GMHHXL, manufactured by Tosoh Corporation
Mobile phase: tetrahydrofuran

### Microstructure (Cis-1, 4-Bond Content and 1, 2-Vinyl Bond) Content

It was determined by an infrared ray method (Morero's method).

Evaluation of Thermoplastic Elastomer Composition:
The fluidity of the resulting thermoplastic elastomer composition was measured as the melt flow rate at 230 °C at a load of 10 kg in accordance with JIS K7210.
Further, using an injection molded sheet of the resulting thermoplastic elastomer composition, hardness, mechanical characteristics (tensile breaking strength and tensile breaking elongation) and compression set were each evaluated by the following methods:

### Hardness

It was measured as a measure for flexibility in accordance with JIS K6253.

### Tensile Breaking Strength and Tensile Breaking Elongation

They were measured in accordance with JIS K6251.

### Compression Set

It was measured in accordance with JIS K6262 under conditions of 70°C and 22 hours.

### Preparation of conjugated diene-based polymer Example 1

Zinc chloride (0.1 mmol) was weighed into a 100-ml three-necked flask, and 2-ethylhexanol (0.2 mmol) was added dropwise thereto, followed by heating at 100°C to conduct a reaction for 2 hours. After the termination of the reaction, 50 ml of toluene was added to prepare a toluene solution of a 2-etylhexanol complex.

A nitrogen-purged autoclave having an internal volume of 5 liters was charged with 2.4 kg of cyclohexane and 300 g of 1,3-butadiene under nitrogen.
A catalyst previously obtained as a catalytic component by reacting and aging a cyclohexane solution of neodymium versatate (0.04 mmol), a toluene solution of methylaluminoxane (2.4 mmol), diisobutylaluminum hydride (4.0 mmol) and the toluene solution of the 2-ethylhexanol complex of zinc chloride (0.04 mmol) with a 5-fold excess of 1,3-butadiene in relation to neodymium at 50°C for 30 minutes was charged into these, and polymerization was conducted at 50°C for 60 minutes. The polymerization conversion rate of 1,3-butadiene was approximately 100%. In order to measure the Mooney viscosity, a part of the polymerization solution was taken out, solidified and dried. The Mooney viscosity (ML₁₊₄, 100°C) was 25, the 1, 4-cis bond content was 97.0%, the 1, 2-vinyl bond content was 1.2%, and Mw/Mn was 2.5.

Then, the temperature of the polymerization solution was maintained at 50°C, and dioctyltin bis-2-ethylhexylmaleate (7.2 mmol) was added. Thereafter, the solution was allowed to stand for 30 minutes, and a methanol solution containing 1.5 g of 2,4-di-t-butyl-p-cresol was added. After the polymerization was stopped, desolvation was performed by steam stripping, and drying was carried out with a roll at 110 °C to obtain a polymer.
The Mooney viscosity (ML₁₊₄, 100°C) of this polymer was 39, the 1,4-cis bond content was 97.0%, the 1,2-vinyl bond content was 1.2%, and Mw/Mn was 2.8.

### Preparation of Thermoplastic Elastomer Composition

Eighty parts of the conjugated diene-based polymer, 20 parts of a crystalline polyolefin-based resin (1) (manufactured by Japan Polychem Corporation, product name: "Novatec PP BC06C") as a thermoplastic resin, 0.2 part of an antiaging agent (manufactured by Ciba Specialty Chemicals Inc., product name: "Irganox 1010") and a softener (manufactured by Idemitsu Kosan Co., Ltd., product name: "Diana Process Oil PW90") were supplied into a 10-liter double arm type pressure kneader (manufactured by Moriyama Co., Ltd.) heated to 150°C, and kneaded at 40 rpm (shear rate: 200/sec) for 20 minutes.
Then, the composition in a molten state was pelletized in a feeder ruder (manufactured by Moriyama Co., Ltd.) set to 180°C and 40 rpm.
Further, 1 part of an organic peroxide (2,5-dimethyl-2,5-di(t-butylperoxy)hexane, manufactured by NOF Corporation, product name: "Perhexa 25B-40") and 1 part of a crosslinking assistant (divinylbenzene, manufactured by Sankyo Kagaku Co., Ltd., product name: "Divinylbenzene 55% Purity) were blended with the resulting pellets, followed by mixing in a Henschel mixer (manufactured by Mitsui Mining Co. , Ltd.) for 30 minutes. Then, using a twin-screw extruder (manufactured by Ikegai Corporation, type: "PCM-45", screws completely engaged with each other and rotating in the same direction, L/D or the ratio of length of a screw flight portion L to screw diameter D: 33.5), the pellets were extruded while conducting dynamic heat treatment thereon under such conditions that they stay for 1 minute and 30 seconds at 230°C, at 300 rpm and at a shear rate of 400 sec⁻¹ to obtain a pellet-shaped dynamic crosslinking type thermoplastic elastomer composition.

### Preparation of Test Pieces of Thermoplastic Elastomer Composition

The pellets of the resulting thermoplastic elastomer composition were injection molded using an injection molding machine (manufactured by The Japan Steel Works, Ltd., product name: "N-100") to prepare sheets having a thickness of 2 mm, a length of 120 mm and a width of 120 mm, which were subjected to various evaluations. The results thereof are shown in Table 1.

### Example 2

Eighty parts of the conjugated diene-based polymer, 20 parts of a crystalline polyolefin-based resin (1) (polypropylene manufactured by Japan Polychem Corporation, product name: "Novatec PP BC06C") and 10 parts of a crystalline polyolefin-based resin (2) (manufactured by Japan Polychem Corporation, product name: "Novatec HD HJ4 90") as thermoplastic resins, 0.2 part of an antiaging agent (manufactured by Ciba Specialty Chemicals Inc., product name: "Irganox 1010") and a softener (manufactured by Idemitsu Kosan Co., Ltd., product name: "Diana Process Oil PW90") were supplied into a 10-liter double arm type pressure kneader (manufactured by Moriyama Co. , Ltd.) heated to 150°C, and kneaded at 40 rpm (shear rate: 200/sec) for 20 minutes.
Then, the composition in a molten state was pelletized in a feeder ruder (manufactured by Moriyama Co., Ltd.) set to 180°C and 40 rpm.
Further, in the same manner as in Example 1, the organic peroxide and the crosslinking assistant were blended with the resulting pellets, and the pellets were extruded while conducting dynamic heat treatment thereon to obtain a pellet-shaped dynamic crosslinking type thermoplastic elastomer composition. The results thereof are shown in Table 1.

### Example 3

Eighty parts of the conjugated diene-based polymer, 20 parts of a crystalline polyolefin-based resin (1) (polypropylene manufactured by Japan Polychem Corporation, product name: "Novatec PP BC06C"), 5 parts of a hydrogenated diene copolymer (1) (hydrogenated styrene-butadiene block copolymer manufactured by JSR Corporation, product name: "Dynaron 8900P") and 5 parts of a diene-based block copolymer (styrene-butadiene block copolymer manufactured by JSR Corporation, product name: "TR2000") as thermoplastic resins, 0.2 part of an antiaging agent (manufactured by Ciba Specialty Chemicals Inc., product name: "Irganox 1010") and a softener (manufactured by Idemitsu Kosan Co., Ltd., product name: "Diana Process Oil PW90") were supplied into a 10-liter double arm type pressure kneader (manufactured by Moriyama Co., Ltd.) heated to 150°C, and kneaded at 40 rpm (shear rate: 200/sec) for 20 minutes.
Then, the composition in a molten state was pelletized in a feeder ruder (manufactured by Moriyama Co., Ltd.) set to 180°C and 40 rpm.
Further, in the same manner as in Example 1, the organic peroxide and the crosslinking assistant were blended with the resulting pellets, and the pellets were extruded while conducting dynamic heat treatment thereon to obtain a pellet-shaped dynamic crosslinking type thermoplastic elastomer composition. The results thereof are shown in Table 1.

### Example 4

Eighty parts of the conjugated diene-based polymer, 20 parts of a crystalline polyolefin-based resin (1) (polypropylene manufactured by Japan Polychem Corporation, product name: "Novatec PP BC06C") and 5 parts of a hydrogenated diene copolymer (2) (hydrogenated styrene-butadiene-styrene block copolymer manufactured by Kuraray Co., Ltd., product name: "Septon 8006") as thermoplastic resins, 0.2 part of an antiaging agent (manufactured by Ciba Specialty Chemicals Inc. , product name: "Irganox 1010") and a softener (manufactured by Idemitsu Kosan Co., Ltd., product name: "Diana Process Oil PW90") were supplied into a 10-liter double arm type pressure kneader (manufactured by Moriyama Co., Ltd.) heated to 150°C, and kneaded at 40 rpm (shear rate: 200/sec) for 20 minutes.
Then, the composition in a molten state was pelletized in a feeder ruder (manufactured by Moriyama Co., Ltd.) set to 180°C and 40 rpm.
Further, in the same manner as in Example 1, the organic peroxide and the crosslinking assistant were blended with the resulting pellets, and the pellets were extruded while conducting dynamic heat treatment thereon to obtain a pellet-shaped dynamic crosslinking type thermoplastic elastomer composition. The results thereof are shown in Table 1.

### Example 5

Eighty parts of the conjugated diene-based polymer, 20 parts of a crystalline polyolefin-based resin (1) (polypropylene manufactured by Japan Polychem Corporation, product name: "Novatec PP BC06C") as a thermoplastic resin, 0.2 part of an antiaging agent (manufactured by Ciba Specialty Chemicals Inc., product name: "Irganox 1010"), a softener (manufactured by Idemitsu Kosan Co., Ltd., product name: "Diana Process Oil PW90") and a filler (manufactured by Shiraishi Kogyo Kaisha, Ltd., product name: "heavy calcium carbonate·Whiton 101") were supplied into a 10-liter double arm type pressure kneader (manufactured by Moriyama Co., Ltd.) heated to 150°C, and kneaded at 40 rpm (shear rate: 200/sec) for 20 minutes.
Then, the composition in a molten state was pelletized in a feeder ruder (manufactured by Moriyama Co., Ltd.) set to 180°C and 40 rpm.
Further, in the same manner as in Example 1, the organic peroxide and the crosslinking assistant were blended with the resulting pellets, and the pellets were extruded while conducting dynamic heat treatment thereon to obtain a pellet-shaped dynamic crosslinking type thermoplastic elastomer composition. The results thereof are shown in Table 1.

### Comparative Example 1

Eighty parts of BR01 [polymerization catalyst: nickel-based, Mooney viscosity (ML₁₊₄, 100°C)=45, 1, 4-cis bond content=95. 0%, Mw/Mn=4. 0] manufactured by JSR Corporation, 20 parts of a crystalline polyolefin-based resin (1) (polypropylene manufactured by Japan Polychem Corporation, product name: "Novatec PP BC06C") as a thermoplastic resin and 0.2 part of an antiaging agent (manufactured by Ciba Specialty Chemicals Inc., product name: "Irganox 1010") were supplied into a 10-liter double arm type pressure kneader (manufactured by Moriyama Co., Ltd.) heated to 150°C, and kneaded at 40 rpm (shear rate: 200/sec) for 20 minutes.
Then, the composition in a molten state was pelletized in a feeder ruder (manufactured by Moriyama Co., Ltd.) set to 180°C and 40 rpm.
Further, in the same manner as in Example 1, the organic peroxide and the crosslinking assistant were blended with the resulting pellets, and the pellets were extruded while conducting dynamic heat treatment thereon to obtain a pellet-shaped dynamic crosslinking type thermoplastic elastomer composition. The results thereof are shown in Table 1.

### Comparative Example 2

Eighty parts of an ethylene-α-olefin-based copolymer (manufactured by JSR Corporation, product name: "EP98AC", oil-extended product with 75% by weight of pareffin oil based on 100 parts by weight of polymer) manufactured by JSR Corporation, 20 parts of a crystalline polyolefin-based resin (1) (polypropylene manufactured by Japan Polychem Corporation, product name: "Novatec PP BC06C") as a thermoplastic resin, 0.2 part of an antiaging agent (manufactured by Ciba Specialty Chemicals Inc., product name: "Irganox 1010") and a softener (manufactured by Idemitsu Kosan Co., Ltd., product name: "Diana Process Oil PW90") were supplied into a 10-liter double arm type pressure kneader (manufactured by Moriyama Co., Ltd.) heated to 150°C, and kneaded at 40 rpm (shear rate: 200/sec) for 20 minutes.
Then, the composition in a molten state was pelletized in a feeder ruder (manufactured by Moriyama Co., Ltd.) set to 180°C and 40 rpm.
Further, in the same manner as in Example 1, the organic peroxide and the crosslinking assistant were blended with the resulting pellets, and the pellets were extruded while conducting dynamic heat treatment thereon to obtain a pellet-shaped dynamic crosslinking type thermoplastic elastomer composition. The results thereof are shown in Table 1.

**[Table 1]**

| | | | Example | | | | | Comparative Example | |
|---|---|---|---|---|---|---|---|---|---|
| | | | 1 | 2 | 3 | 4 | 5 | 1 | 2 |
| Composition (parts) | Conjugated Diene-Based Polymer | | 80 | 70 | 70 | 50 | 80 | | |
| | BR01 | | | | | | | 80 | |
| | Oil-Extended Ethylene-α-Olefin--Based Copolymer | | | | | | | | 75 |
| | Crystalline Polyolefin resin (1) | | 20 | 20 | 20 | 20 | 20 | 20 | 25 |
| | Crystalline Polyolefin resin (2) | | | 10 | | | | | |
| | Hydrogenated Diene Copolymer (1) | | | | 5 | | | | |
| | Hydrogenated Diene-Based Copolymer (2) | | | | | 30 | | | |
| | Diene-Based Block Copolymer | | | | 5 | | | | |
| | Mineral Oil-Based Softener | | 30 | 30 | 30 | 30 | 35 | | |
| | Filler | | | | | | 15 | | |
| | Organic Peroxide | | 1 | 1 | 1 | 1 | 1 | 1 | 1 |
| | Crosslinking Assistant | | 1 | 1 | 1 | 1 | 1 | 1 | 1 |
| | Antiaging Agent | | 0.2 | 0.2 | 0.2 | 0.2 | 0.2 | 0.2 | 0.2 |
| Fluidity | 230°Cx10 kg | g/10 min | 22 | 21 | 30 | 50 | 31 | 5 | 280 |
| Hardness | HS (DuroA) | - | 66 | 78 | 65 | 64 | 71 | 63 | 60 |
| Tensile Breaking Strength | T_{B} | MPa | 5.1 | 6.7 | 5 | 6.7 | 6 | 3.1 | 7.3 |
| Tensile Breaking Elongation | E_{B} | % | 200 | 220 | 210 | 300 | 240 | 180 | 770 |
| Compression Set | CS | % | 21 | 25 | 23 | 26 | 21 | 23 | 40 |

### Industrial Applicability

The thermoplastic elastomer composition of the present invention is excellent in flexibility, compression set and mechanical strength, so that it can be widely used in interior and exterior surface materials such as bumpers, exterior moldings, window seal gaskets, door seal gaskets, trunk seal gaskets, roof side rails, emblems, inner panels, door trims and console boxes, weather strips and leather seats requiring scratch resistance for automobiles, seal materials, interior and exterior surface materials and the like for aircraft and ships, seal materials, interior and exterior surface materials or waterproof materials and the like for civil engineering and construction, seal materials and the like for general machinery and equipment, packing for light electrical parts and tap water, seal materials, surface materials, housing and the like in fuel cell stacks, rubber pads for railroads, rolls for information equipment, cleaning blades, films for electronic parts, protective films in flat panel display (FPD) production processes and seal materials for semiconductors, liquid crystal displays and the like, and general processed goods such as films for protecting images such as photographs, decorative films for building materials, medical equipment parts, electric wires, convenience goods and sports goods.

## Claims

1. A thermoplastic elastomer composition **characterized in that** the composition comprises (A) a conjugated diene-based polymer obtained by polymerizing a conjugated diene-based compound using a rare earth element compound-based catalyst and (B) a thermoplastic resin.

2. The thermoplastic elastomer composition according to claim 1, wherein the conjugated diene-based polymer (A) is one obtained by polymerizing the conjugated diene-based compound using a catalyst containing the following components (a) to (d) as main components.
Component (a) : a compound containing a rare earth element having an atomic number of 57-31 in the Periodic Table or a compound obtained by reaction of the compound with a Lewis base;
Component (b): an alumoxane;
Component (c) : an organoaluminum compound corresponding to AlR¹R²R³ (wherein R¹ and R², which may be the same or different, represent a hydrocarbon group having 1 to 10 carbon atoms or a hydrogen atom, and R³ represents a hydrocarbon group having 1 to 10 carbon atoms, provided that R³ may be the same as or different from the above R¹ or R²); and
Component (d): a silicon halide compound and/or a halogenated organosilicon compound.

3. The thermoplastic elastomer composition according to claim 1, wherein the component (a) is neodymium.

4. The thermoplastic elastomer composition according to any one of claims 1 to 3, wherein the conjugated diene-based compound is 1,3-butadiene.

5. The thermoplastic elastomer composition according to any one of claims 1 to 4, wherein the conjugated diene-based polymer preferably has a 1,4-cis bond content of 90% or more, and a ratio (Mw/Mn) of a weight-average molecular weight (Mw) to a number-average molecular weight (Mn) of 3.5 or less as measured by gel permeation chromatography.

6. The thermoplastic elastomer composition according to claim 1, wherein the thermoplastic resin (B) is at least one selected from the group consisting of a crystalline polyolefin-based resin, an amorphous polyolefin-based resin and a hydrogenated diene-based polymer.

7. The thermoplastic elastomer composition according to any one of claims 1 to 6, wherein the composition is obtained by dynamic heat treatment of the conjugated diene-based polymer (A) and the thermoplastic resin (B) under the presence of a crosslinking agent.

8. The thermoplastic elastomer composition according to any one of claims 1 to 7, wherein the conjugated diene-based polymer (A) is from 50 to 95 parts by weight and the thermoplastic resin (B) is from 50 to 5 parts by weight [provided that (A)+(B)=100 parts by weight].

9. The thermoplastic elastomer composition according to any one of claims 1 to 8, wherein the composition may contain a softener and/or a plasticizer in an amount of 200 parts by weight or less, when the total of the conjugated diene-based polymer (A) and the thermoplastic resin (B) is taken as 100 parts by weight.

10. A formed article formed of the thermoplastic elastomer composition according to any one of claims 1 to 8.

## Amended claims

### Amended claims under Art. 19.1 PCT

**1.** (amended) A thermoplastic elastomer composition **characterized in that** the composition comprises (A) a conjugated diene-based polymer obtained by polymerizing a conjugated diene-based compound using a rare earth element compound-based catalyst and (B) a thermoplastic resin at least one selected from the group consisting of a crystalline polyolefin-based resin and an amorphous polyolefin-based resin.

**2.** (amended) The thermoplastic elastomer composition according to claim 1, wherein the conjugated diene-based polymer (A) is one obtained by polymerizing the conjugated diene-based compound using a catalyst containing the following components (a) to (d) as main components.
Component (a) : a compound containing a rare earth element having an atomic number of 57-71 in the Periodic Table or a compound obtained by reaction of the compound with a Lewis base;
Component (b): an alumoxane;
Component (c): an organoaluminum compound corresponding to AlR¹R²R³ (wherein R¹ and R², which may be the same or different, represent a hydrocarbon group having 1 to 10 carbon atoms or a hydrogen atom, and R³ represents a hydrocarbon group having 1 to 10 carbon atoms, provided that R³ may be the same as or different from the above R¹ or R²); and
Component (d): a silicon halide compound and/or a halogenated organosilicon compound.

**3.** (amended) The thermoplastic elastomer composition according to claim 2, wherein the component (a) is neodymium.

**4.** The thermoplastic elastomer composition according to any one of claims 1 to 3, wherein the conjugated diene-based compound is 1,3-butadiene.

**5.** The thermoplastic elastomer composition according to any one of claims 1 to 4, wherein the conjugated diene-based polymer preferably has a 1,4-cis bond content of 90% or more, and a ratio (Mw/Mn) of a weight-average molecular weight (Mw) to a number-average molecular weight (Mn) of 3.5 or less as measured by gel permeation chromatography.

**6.** (canceled)

**7.** (amended) The thermoplastic elastomer composition according to any one of claims 1 to 5, wherein the composition is obtained by dynamic heat treatment of the conjugated diene-based polymer (A) and the thermoplastic resin at least one selected from the group consisting of a crystalline polyolefin-based resin and an amorphous polyolefin-based resin (B) under the presence of a crosslinking agent.

**8.** (amended) The thermoplastic elastomer composition according to any one of claims 1 to 7, wherein the conjugated diene-based polymer (A) is from 50 to 95 parts by weight and the thermoplastic resin at least one selected from the group consisting of a crystalline polyolefin-based resin and an amorphous polyolefin-based resin (B) is from 50 to 5 parts by weight [provided that (A)+(B)=100 parts by weight].

**9.** (amended) The thermoplastic elastomer composition according to any one of claims 1 to 8, wherein the composition may contain a softener and/or a plasticizer in an amount of 200 parts by weight or less, when the total of the conjugated diene-based polymer (A) and the thermoplastic resin at least one selected from the group consisting of a crystalline polyolefin-based resin and an amorphous polyolefin-based resin (B) is taken as 100 parts by weight.

**10.** (amended) A formed article formed of the thermoplastic elastomer composition according to any one of claims 1 to 9.
